# EUROPEAN PATENT APPLICATION

(11) **EP 4 257 728 A1**
(43) Date of publication of application: **11.10.2023**
(21) Application number: 21900247.4
(22) Date of filing: 16.06.2021
(51) Int. Cl.: C25B 1/02, C01B 3/56, C25B 9/00, C25B 15/00, H01M 8/04

(54) **HYDROGEN SYSTEM AND METHOD FOR OPERATING HYDROGEN SYSTEM**

(30) Priority: 03.12.2020 JP 2020200895; 07.06.2021 JP 2021095057
(71) Applicant: Panasonic Intellectual Property Management Co., Ltd., Osaka-shi, Osaka 540-6207 (JP)
(72) Inventor: ONUMA, Shigenori, Kadoma-shi, Osaka 571-0057 (JP); NAKAUE, Takayuki, Kadoma-shi, Osaka 571-0057 (JP)
(74) Representative: Grünecker Patent- und Rechtsanwälte PartG mbB
(86) International application number: PCT/JP2021/022961
(87) International publication number: WO 2022/118490

(57) **Abstract**

A hydrogen system includes a compressor that causes, by applying a voltage across an anode and a cathode with an interposed electrolyte membrane therebetween, hydrogen in a hydrogen-containing gas supplied to the anode to move to the cathode and produces compressed hydrogen; a pressure regulator that regulates pressure at least at the anode; and a controller that controls the pressure regulator to make the pressure at the anode higher than pressure at the cathode with the hydrogen-containing gas prevented from flowing out of the anode in a stop.

## Description

### Technical Field

The present disclosure relates to a hydrogen system and a method for operating a hydrogen system.

### Background Art

In recent years, hydrogen has been attracting attention as a clean alternative energy source to replace fossil fuels against a background of environmental problems, such as global warming, and energy issues, such as the depletion of petroleum resources. When burnt, basically, hydrogen only produces water, with zero emissions of carbon dioxide, which causes global warming, and almost zero emissions of substances like nitrogen oxides, and this is why hydrogen has been a promising source of clean energy. An example of a device that efficiently uses hydrogen as a fuel is fuel cells, the development and popularization of which are ongoing for automotive power supply and household power generation applications.

In the forthcoming hydrogen society, technologies will need to be developed to enable not only the production but also high-density storage and small-volume, low-cost transport or use of hydrogen. In particular, further popularization of fuel cells, which provide distributed energy sources, requires preparing an infrastructure for the supply of hydrogen. Hence various attempts to produce, purify, and densely store high-purity hydrogen are ongoing to ensure stable supply of hydrogen.

For example, PTL 1 states that hydrogen gas can be purified and pressurized through water electrolysis by applying a voltage across an anode and a cathode. Specifically, passing an electric current through a polymer electrolyte membrane sandwiched between an anode and a cathode will extract hydrogen from water in the anode and turn it protons. The protons then move inside the electrolyte membrane from the anode to the cathode, bringing water molecules with themselves, and at the cathode they are turned back into hydrogen. The multilayer structure of an anode, an electrolyte membrane, and a cathode is referred to as a membrane electrode assembly (MEA).

In PTL 1, furthermore, it is proposed to sweep out residual gas (hydrogen) and water from an electrode structure functioning as a fuel cell and ion pump by supplying air to the anode when the structure stops operating in its hydrogen purification mode.

To take another example, PTL 2 proposes replacing residual hydrogen-containing gas in the anode of an electrochemical hydrogen device with purified hydrogen gas similar to that in the cathode when stopping hydrogen production by the device. For this to be done, an on-off valve at the outlet of the anode is shut with that at the inlet of the anode open, and the power supply is controlled to pass an electric current through the electrochemical device in the direction opposite that during the hydrogen production operation.

### Citation List

### Patent Literature

PTL 1: Japanese Unexamined Patent Application Publication No. 2011-100610
PTL 2: Japanese Unexamined Patent Application Publication No. 2020-172405

### Summary of Invention

### Technical Problem

An object of the present disclosure is to provide, for example, a hydrogen system and a method for operating a hydrogen system that can provide a smaller loss of efficiency in hydrogen compression at a restart than known ones.

### Solution to Problem

A hydrogen system according to an aspect of the present disclosure includes a compressor that causes, by applying a voltage across an anode and a cathode with an interposed electrolyte membrane therebetween, hydrogen in a hydrogen-containing gas supplied to the anode to move to the cathode and produces compressed hydrogen; a pressure regulator that regulates pressure at least at the anode; and a controller that controls the pressure regulator to make the pressure at the anode higher than pressure at the cathode with the hydrogen-containing gas prevented from flowing out of the anode in a stop.

A method according to an aspect of the present disclosure for operating a hydrogen system includes a step of causing, by applying a voltage across an anode and a cathode with an interposed electrolyte membrane therebetween, hydrogen in a hydrogen-containing gas supplied to the anode to move to the cathode and producing compressed hydrogen; and a step of making pressure at the anode higher than pressure at the cathode with the hydrogen-containing gas prevented from flowing out of the anode in a stop. Advantageous Effects of Invention

The hydrogen system according to an aspect of the present disclosure and the method according to an aspect of the present disclosure for operating a hydrogen system provide the advantage of a smaller loss of efficiency in hydrogen compression at a restart than known ones.

### Brief Description of Drawings

[Fig. 1] Fig. 1 is a diagram illustrating an example of a hydrogen system according to Embodiment 1.
[Fig. 2] Fig. 2 is a diagram illustrating an example of a hydrogen system according to Example 3 of Embodiment 1.
[Fig. 3] Fig. 3 is a diagram illustrating an example of a hydrogen system according to Embodiment 2.
[Fig. 4] Fig. 4 is a diagram illustrating an example of a hydrogen system according to Example 3 of Embodiment 2.
[Fig. 5] Fig. 5 is a flowchart illustrating an example of an operation of the hydrogen system according to Example 3 of Embodiment 2.
[Fig. 6] Fig. 6 is a flowchart illustrating an example of an operation of a hydrogen system according to Example 4 of Embodiment 2.
[Fig. 7] Fig. 7 is a flowchart illustrating an example of an operation of a hydrogen system according to Example 5 of Embodiment 2.
[Fig. 8] Fig. 8 is a flowchart illustrating an example of an operation of a hydrogen system according to a variation of Embodiment 2.
[Fig. 9] Fig. 9 is a diagram illustrating an example of a hydrogen system according to Embodiment 3.
[Fig. 10] Fig. 10 is a flowchart illustrating an example of an operation of the hydrogen system according to Embodiment 3.
[Fig. 11] Fig. 11 is a diagram illustrating an example of a hydrogen system according to Embodiment 4.
[Fig. 12] Fig. 12 is a flowchart illustrating an example of an operation of the hydrogen system according to Embodiment 4.
[Fig. 13] Fig. 13 is a diagram illustrating an example of a hydrogen system according to Embodiment 5.
[Fig. 14] Fig. 14 is a flowchart illustrating an example of an operation of the hydrogen system according to Embodiment 5.
[Fig. 15] Fig. 15 is a flowchart illustrating an example of an operation of a hydrogen system according to a variation of Embodiment 5.
[Fig. 16] Fig. 16 is a diagram illustrating an example of a hydrogen system according to Embodiment 6.
[Fig. 17] Fig. 17 is a flowchart illustrating an example of an operation of the hydrogen system according to Embodiment 6.
[Fig. 18] Fig. 18 is a diagram illustrating an example of a hydrogen system according to Embodiment 7.
[Fig. 19] Fig. 19 is a flowchart illustrating an example of an operation of the hydrogen system according to Embodiment 7.

### Description of Embodiments

In general, compressors of electrochemical type have an electrolyte membrane that exhibits its desired proton conductivity in a moist state. Maintaining the desired efficiency of the compressor in hydrogen compression therefore requires keeping the electrolyte membrane moist. To this end, a highly humid hydrogen-containing gas has often been supplied to the anode of the compressor.

When this is done, supplying air to the anode during a stop to eliminate residual hydrogen and water in the anode as in PTL 1 will reduce the possibility of flooding (blockage of gas flow channels by water) at the anode. PTL 1, however, does not fully discuss the prevention of flooding. That is for the following reason.

First, while the compressor is compressing hydrogen, a voltage is applied across the anode and cathode of the MEA (cell). In this case, therefore, protons move inside the electrolyte membrane from the anode to the cathode while bringing water molecules with themselves (electroosmosis) as a result of an electric current flowing between the anode and the cathode. The electroosmotic water having moved from the anode to the cathode also moves from the cathode to the anode because of a differential pressure between the cathode and the anode (back diffusion). The higher gas pressure on the cathode side is, the more water moves from the cathode to the anode. While the compressor is compressing hydrogen, back diffusion water coming from the cathode to the anode does not stay there, and therefore flooding is prevented, because a hydrogen-containing gas is circulating on the anode.

An anode purge with air as in PTL 1 before turning off the compressor will force out the water that is in the anode immediately before the purge. After the anode purge, however, back diffusion of water will continue until there is no differential pressure between the anode and the cathode, and the back diffusion water will stay on the anode. It is, therefore, likely that flooding occurs at the anode after the compressor goes off. Once flooding occurs, the diffusion of the hydrogen-containing gas on the anode of the compressor will be hampered at a restart, and the voltage applicator may need to apply a higher voltage to ensure the movement of a predetermined quantity of protons to the cathode. This makes the hydrogen system less efficient in hydrogen compression at a restart of the compressor.

To address this, a hydrogen system according to a first aspect of the present disclosure includes a compressor that causes, by applying a voltage across an anode and a cathode with an interposed electrolyte membrane therebetween, hydrogen in a hydrogen-containing gas supplied to the anode to move to the cathode and produces compressed hydrogen; a pressure regulator that regulates pressure at least at the anode; and a controller that controls the pressure regulator to make the pressure at the anode higher than pressure at the cathode with the hydrogen-containing gas prevented from flowing out of the anode in a stop.

Configured as such, the hydrogen system according to this aspect can provide a smaller loss of efficiency in hydrogen compression at a restart than known ones.

Specifically, the hydrogen system according to this aspect is configured such that during a stop and with the hydrogen-containing gas prevented from flowing out of the anode, the pressure regulator is controlled to make the pressure at the anode higher than the pressure at the cathode. This helps reduce the back diffusion of water from the cathode to the anode while the hydrogen system is off. If condensate forms at the anode, furthermore, the differential pressure between the anode and the cathode helps diffuse the condensate from the anode to the cathode. At a lower risk of flooding at the anode, the hydrogen system according to this aspect provides a reduced loss of efficiency in hydrogen compression at a restart.

In addition, the user may perform a gas purge operation at the anode during a stop to prevent flooding at the anode as in PTL 1, or, if flooding has already occurred at the anode during a stop, the user may conduct a gas purge operation to resolve it when restarting the hydrogen system. As stated, the hydrogen system according to this aspect can diffuse water in the anode to the cathode and mitigate the back diffusion of water from the cathode to the anode by making the pressure at the anode higher than the pressure at the cathode. The hydrogen system according to this aspect, therefore, can operate without such gas purge operations during a stop or at a restart. Even if any such gas purge operation is carried out, furthermore, the hydrogen system according to this aspect requires a shorter duration of the gas purge operation.

A hydrogen system according to a second aspect of the present disclosure is: For the hydrogen system according to the first aspect, the controller may control the pressure regulator to increase the pressure at the anode to make the pressure at the anode higher than the pressure at the cathode.

A hydrogen system according to a third aspect of the present disclosure is: For the hydrogen system according to the second aspect, when the differential pressure between the anode and the cathode decreases after the controller controls the pressure regulator to increase the pressure at the anode, the controller may control the pressure regulator to increase the pressure at the anode.

Configured as such, the hydrogen systems according to these aspects can maintain an appropriate differential pressure between the anode and the cathode because, even if the differential pressure decreases after the pressure at the anode is increased, they are capable of further increasing the pressure at the anode.

For example, when the temperature of the compressor goes down over time after the pressure at the anode is increased, steam in the hydrogen-containing gas present at the anode can condense. The resulting drop in the pressure at the anode, associated with a reduced number of moles of gas molecules of the hydrogen-containing gas present there, will lower the differential pressure between the anode and the cathode, potentially weakening its effects, the diffusion of water from the anode to the cathode and the reduction of the back diffusion of water from the cathode to the anode. The hydrogen systems according to these aspects, configured as described above, offer a reduced risk that these effects will be weakened.

A hydrogen system according to a fourth aspect of the present disclosure is: For the hydrogen system according to any one of the first to third aspects, the pressure regulator may include a gas supply unit that supplies gas to the anode, and with the outlet of the anode sealed, the controller may control the gas supply unit to supply gas to the anode to increase the pressure at the anode.

Configured as such, the hydrogen system according to this aspect can increase the pressure at the anode properly by using supply pressure of gas supplied to the anode with the outlet of the anode sealed.

A hydrogen system according to a fifth aspect of the present disclosure is: For the hydrogen system according to the first aspect, the pressure regulator may regulate pressure at the anode and at the cathode, and the controller may control the pressure regulator to increase the pressure at the anode and reduce the pressure at the cathode, thereby making the pressure at the anode higher than the pressure at the cathode.

Configured as such, the hydrogen system according to this aspect maintains the differential pressure between the anode and the cathode easily, compared with when the pressure at the anode is made higher than the pressure at the cathode only by reducing the pressure at the cathode or when the pressure at the anode is made higher than the pressure at the cathode only by increasing the pressure at the anode. By virtue of this, the hydrogen system according to this aspect achieves an even smaller loss of efficiency in hydrogen compression at a restart.

A hydrogen system according to a sixth aspect of the present disclosure is: For the hydrogen system according to the fifth aspect, when the differential pressure between the anode and the cathode decreases after the controller controls the pressure regulator to increase the pressure at the anode and reduce the pressure at the cathode, the controller may control the pressure regulator to increase the pressure at the anode.

Configured as such, the hydrogen system according to this aspect can maintain an appropriate differential pressure between the anode and the cathode because, even if the differential pressure decreases after the pressure at the anode is increased and the pressure at the cathode is reduced, it is capable of further increasing the pressure at the anode.

A hydrogen system according to a seventh aspect of the present disclosure is: For the hydrogen system according to the fifth aspect, when the differential pressure between the anode and the cathode decreases after the controller controls the pressure regulator to increase the pressure at the anode and reduce the pressure at the cathode, the controller may control the pressure regulator to reduce the pressure at the cathode.

Configured as such, the hydrogen system according to this aspect can maintain an appropriate differential pressure between the anode and the cathode because, even if the differential pressure decreases after the pressure at the anode is increased and the pressure at the cathode is reduced, it is capable of further reducing the pressure at the cathode.

A hydrogen system according to an eighth aspect of the present disclosure is: For the hydrogen system according to any one of the first to seventh aspects, the pressure regulator may include a gas supply unit that supplies gas to the anode and a first valve for discharging cathode gas containing compressed hydrogen from the cathode into somewhere other than the anode, and with the outlet of the anode sealed, the controller may control the gas supply unit to supply gas to the anode to increase the pressure at the anode and open the first valve to reduce the pressure at the cathode.

Configured as such, the hydrogen system according to this aspect can increase the pressure at the anode properly by using supply pressure of gas supplied to the anode with the outlet of the anode sealed. The first valve, furthermore, functions as a valve for releasing high-pressure cathode gas from the cathode to somewhere other than the anode. By opening the first valve, therefore, the hydrogen system according to this aspect can reduce the pressure at the cathode properly.

A hydrogen system according to a ninth aspect of the present disclosure is: For the hydrogen system according to the fifth or sixth aspect, the pressure regulator may include a gas supply unit that supplies gas to the anode and a second valve for supplying cathode gas containing compressed hydrogen from the cathode to the anode, and the controller may open the second valve to reduce the pressure at the cathode and then, with the outlet of the anode sealed, control the gas supply unit to supply gas to the anode to increase the pressure at the anode.

Configured as such, the hydrogen system according to this aspect can increase the pressure at the anode properly by using supply pressure of gas supplied to the anode with the outlet of the anode sealed. By opening the second valve, furthermore, the hydrogen system according to this aspect can reduce the pressure at the cathode to make it close to the pressure at the anode.

The second valve functions as a valve for controlling cathode gas supply from the cathode to the anode. By supplying cathode gas from the cathode to the anode using the second valve, therefore, the hydrogen system according to this aspect reduces the amount of gas the gas supply unit supplies to the anode to pressurize the cathode compared with when no cathode gas is supplied.

A hydrogen system according to a tenth aspect of the present disclosure is: For the hydrogen system according to the fifth or seventh aspect, the pressure regulator may include a second valve for supplying cathode gas containing compressed hydrogen from the cathode to the anode and a first valve for discharging the cathode gas into somewhere other than the anode, and with the outlet of the anode sealed, the controller may open the second valve to increase the pressure at the anode and then open the first valve to reduce the pressure at the cathode.

Configured as such, the hydrogen system according to this aspect can make the pressure at the anode higher than the pressure at the cathode first by increasing the pressure at the anode properly, by opening the second valve and thereby using the pressure of cathode gas with the outlet of the anode sealed, and then by further reducing the pressure at the cathode by opening the first valve.

A hydrogen system according to an eleventh aspect of the present disclosure is: The hydrogen system according to any one of the fourth and eighth to tenth aspects may further include a discharge line through which the hydrogen-containing gas discharged from the anode flows and a third valve on the discharge line, and the controller may shut the third valve to make the outlet of the anode sealed.

Configured as such, the hydrogen system according to this aspect can make the outlet of the anode sealed simply by shutting the third valve installed on the discharge line.

A hydrogen system according to a twelfth aspect of the present disclosure is: For the hydrogen system according to any one of the first to third and fifth to seventh aspects, the controller may control the pressure regulator to make the pressure at the anode less than 1 MPa.

Configured as such, the hydrogen system according to this aspect makes the pressure at the anode less than 1 MPa as a gauge pressure, a pressure based on atmospheric pressure. This makes it easier to use a low-pressure design in making elements that adjoin the anode in the hydrogen-containing gas supply system and gas lines for the anode, helping reduce equipment cost compared with when the pressure at the anode is made higher than or equal to 1 MPa as a gauge pressure.

A hydrogen system according to a thirteenth aspect of the present disclosure is: For the hydrogen system according to any one of the fourth and eighth to tenth aspects, the gas supply unit may supply a gas different from the hydrogen-containing gas.

A hydrogen system according to a fourteenth aspect of the present disclosure is: For the hydrogen system according to any one of the fifth to seventh aspects, the pressure regulator may include a voltage applicator that applies a voltage across the anode and the cathode, and with the inlet and outlet of the anode sealed, the controller may control the voltage applicator to apply a voltage across the anode and the cathode in a polarity opposite a polarity before the stop, thereby increasing the pressure at the anode and reducing the pressure at the cathode.

Configured as such, the hydrogen system according to this aspect applies a voltage across the anode and the cathode during a stop and with the inlet and outlet of the anode sealed. Opposite that before the stop, the applied voltage makes protons move from the cathode to the anode through the electrolyte membrane, thereby increasing the pressure at the anode and reducing the pressure at the cathode.

A method according to a fifteenth aspect of the present disclosure for operating a hydrogen system includes a step of causing, by applying a voltage across an anode and a cathode with an interposed electrolyte membrane therebetween, hydrogen in a hydrogen-containing gas supplied to the anode to move to the cathode and producing compressed hydrogen; and a step of making pressure at the anode higher than pressure at the cathode with the hydrogen-containing gas prevented from flowing out of the anode in a stop .

By virtue of this, the method according to this aspect for operating a hydrogen system can provide a smaller loss of efficiency in hydrogen compression at a restart than known ones.

The details of the advantages of the method according to this aspect for operating a hydrogen system are not described; they can be easily understood by referring to and considering the advantages of the hydrogen system according to the first aspect.

A method according to a sixteenth aspect of the present disclosure for operating a hydrogen system is: In the method according to the fifteenth aspect for operating a hydrogen system, the pressure at the anode may be made higher than the pressure at the cathode by increasing the pressure at the anode.

A method according to a seventeenth aspect of the present disclosure for operating a hydrogen system is: In the method according to the fifteenth aspect for operating a hydrogen system, the pressure at the anode may be made higher than the pressure at the cathode by increasing the pressure at the anode and reducing the pressure at the cathode.

The advantages of the method according to this aspect for operating a hydrogen system are not described; they can be easily understood by referring to and considering the advantages of the hydrogen system according to the fifth aspect.

A method according to an eighteenth aspect of the present disclosure for operating a hydrogen system is: In the method according to the sixteenth or seventeenth aspect for operating a hydrogen system, the pressure at the anode may be increased by supplying gas to the anode.

The advantages of the method according to this aspect for operating a hydrogen system are not described; they can be easily understood by referring to and considering the advantages of the hydrogen system according to the fourth aspect.

A method according to a nineteenth aspect of the present disclosure for operating a hydrogen system is: In the method according to the seventeenth aspect for operating a hydrogen system, the pressure at the cathode may be reduced by discharging cathode gas containing compressed hydrogen from the cathode.

The advantages of the method according to this aspect for operating a hydrogen system are not described; they can be easily understood by referring to and considering the advantages of the hydrogen system according to the eighth or ninth aspect.

A method according to a twentieth aspect of the present disclosure for operating a hydrogen system is: In the method according to the eighteenth aspect for operating a hydrogen system, the pressure at the anode may be increased by supplying a gas different from the hydrogen-containing gas to the anode.

The following describes embodiments of the present disclosure with reference to the attached drawings. The embodiments described below are all given to illustrate examples of the aspects described above. That is, the numeric values, shapes, materials, structural elements, the positions of and connections between elements, and other information given below are merely examples and not intended to limit the aspects described above unless given in a claim. Any element mentioned below but not recited in an independent claim, which represents the most generic concept of the present aspect, is described as being optional. An element assigned the same reference sign in different drawings may be described only once. The drawings are schematic illustrations of structural elements given to help understand and therefore may be inaccurate in the representation of shape, relative dimensions, etc. For operations, the order of steps, for example, can be changed, and other known steps can be added.

### (Embodiment 1)

The following embodiments describe the structure and operation of hydrogen systems having an electrochemical hydrogen pump as an example of the aforementioned compressor. Pressures in the following embodiments are gauge pressures, i.e., pressures based on atmospheric pressure.

### [System Structure]

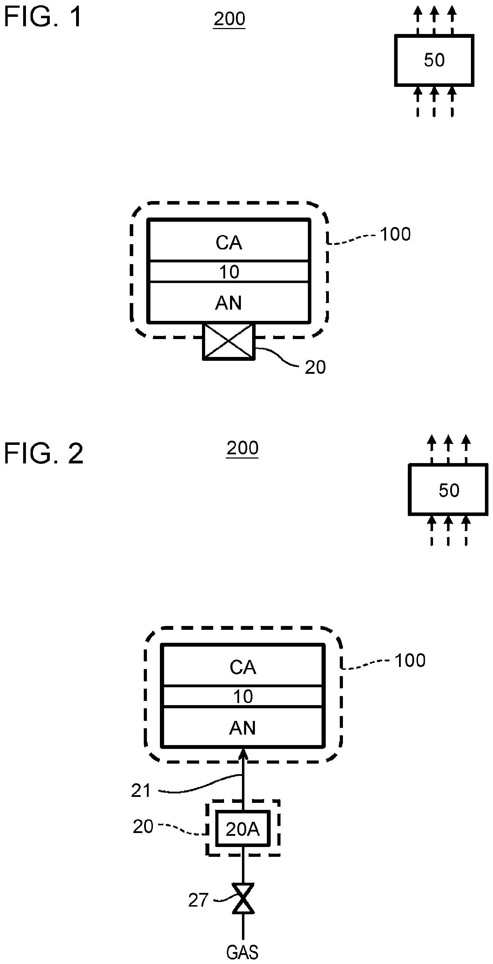

Fig. 1 is a diagram illustrating an example of a hydrogen system according to Embodiment 1.

In the example illustrated in Fig. 1, the hydrogen system 200 according to this embodiment includes an electrochemical hydrogen pump 100, a pressure regulator 20, and a controller 50.

The electrochemical hydrogen pump 100 includes an electrolyte membrane 10, an anode AN, and a cathode CA. The electrochemical hydrogen pump 100 may include a stack of multiple MEAs (cells). The details will be described later.

The anode AN is on one primary surface of the electrolyte membrane 10. The anode AN is an electrode including an anode catalyst layer and an anode gas diffusion layer. The cathode CA is on the other primary surface of the electrolyte membrane 10. The cathode CA is an electrode including a cathode catalyst layer and a cathode gas diffusion layer. As a result, the electrolyte membrane 10 is sandwiched between the anode AN and the cathode CA, touching each of the anode and cathode catalyst layers.

The electrolyte membrane 10 can be of any type as long as it is proton-conductive. Examples of electrolyte membranes 10 include a fluoropolymer electrolyte membrane and a hydrocarbon electrolyte membrane. Specific examples of materials that can be used as the electrolyte membrane 10 include, but are not limited to, Nafion^{®} (DuPont) and Aciplex^{®} (Asahi Kasei Corporation).

The anode catalyst layer is one primary surface of the electrolyte membrane 10. The anode catalyst layer contains, but does not need to contain, a form of carbon able to support a catalyst metal (e.g., platinum) in a dispersed state.

The cathode catalyst layer is on the other primary surface of the electrolyte membrane 10. The cathode catalyst layer contains, but does not need to contain, a form of carbon able to support a catalyst metal (e.g., platinum) in a dispersed state.

For both the cathode and anode catalyst layers, examples of how to prepare the catalyst include, but are not limited to, several methods. For instance, examples of carbon powders include powders of graphite, carbon black, electrically conductive activated carbon, etc. It is not critical how to make the platinum or other catalyst metal supported on the carbon carrier. For example, methods such as powder mixing or liquid-phase mixing may be used. An example of the latter, liquid-phase mixing, is to disperse the carrier, such as carbon, in a colloid of the catalyst component to make it adsorbed onto the carrier. The state of the platinum or other catalyst metal supported on the carbon carrier is not critical. For example, fine particles of the catalyst metal may be supported on the carrier in a highly dispersed state.

The cathode gas diffusion layer is on the cathode catalyst layer. The cathode gas diffusion layer is made of a porous material, is electrically conductive, and allows gases to diffuse therethrough. Desirably, the cathode gas diffusion layer is elastic enough to smoothly follow the displacement and deformation of structural components that occur because of the differential pressure between the cathode CA and the anode AN when the electrochemical hydrogen pump 100 operates. Examples of base materials that can be used for the cathode gas diffusion layer include, but are not limited to, a sintered mass of carbon fiber.

The anode gas diffusion layer is on the anode catalyst layer. The anode gas diffusion layer is made of a porous material, is electrically conductive, and allows gases to diffuse therethrough. Desirably, the anode gas diffusion layer is rigid enough to withstand the aforementioned differential pressure pressing the electrolyte membrane 10 against it when the electrochemical hydrogen pump 100 operates. Examples of base materials that can be used for the anode gas diffusion layer include, but are not limited to, a sintered mass of carbon fibers and a sintered mass of titanium.

Configured as described above, the electrochemical hydrogen pump 100 is a device that produces compressed hydrogen by applying a voltage across an anode AN and a cathode CA with an interposed electrolyte membrane 10 therebetween and thereby transferring, to the cathode CA, hydrogen in a hydrogen-containing gas supplied to the anode AN. The hydrogen-containing gas may be, for example, hydrogen gas produced by water electrolysis or may be reformed gas produced by reforming hydrocarbon gas. The voltage, furthermore, may be applied by a voltage applicator not illustrated. A specific example of such a voltage applicator will be described in Embodiment 7.

The pressure regulator 20 is a device that regulates the pressure at least at the anode AN. The pressure regulator 20 can be of any type as long as it can regulate the pressure at the anode AN. A specific example of such a pressure regulator 20 will be described in Example 3 of this embodiment.

During a stop and with the hydrogen-containing gas prevented from flowing out of the anode AN, the controller 50 controls the pressure regulator 20 to make the pressure at the anode AN higher than the pressure at the cathode CA. During this, the outlet of the cathode CA is sealed by the controller 50 shutting a cathode valve (not illustrated). The controller 50 may control the overall operation of the hydrogen system 200. "During a stop" in this context refers to a time after the system stops supplying cathode gas containing compressed hydrogen from the cathode CA of the electrochemical hydrogen pump 100 to the hydrogen consumer (not illustrated). Examples of hydrogen consumers include hydrogen tanks, hydrogen infrastructure piping, and fuel cells. An example of a hydrogen tank is a hydrogen cylinder. "The pressure at the anode AN" and "the pressure at the cathode CA," furthermore, refer to the pressure in the gas flow channel leading to the anode AN and the pressure in the gas flow channel leading to the cathode CA, respectively. Specific examples of how to achieve the state of "the hydrogen-containing gas prevented from being flowing out of the anode AN" will be described later.

The controller 50 includes, for example, a processor (not illustrated) and a data storage (not illustrated) that stores a control program. Examples of processors include an MPU and a CPU. An example of a data storage is a memory. The controller 50 may be a single controller that provides centralized control, or may be composed of multiple controllers that work together to provide distributed control.

Although not illustrated in the drawing, the hydrogen system 200 includes any components and equipment as it requires to compress hydrogen.

For example, the electrochemical hydrogen pump 100 may have a pair of separators sandwiching the anode AN and the cathode CA from outside, with one separator on one electrode. In that case, the separator touching the anode AN is an electrically conductive plate-shaped element for supplying the hydrogen-containing gas to the anode AN. This plate-shaped element has a serpentine gas flow channel through which the hydrogen-containing gas to be supplied to the anode AN flows. The separator touching the cathode CA is an electrically conductive plate-shaped element for guiding hydrogen out of the cathode CA. This plate-shaped element has a gas flow channel through which hydrogen guided out of the cathode CA flows.

The electrochemical hydrogen pump 100, furthermore, usually has a gasket or other sealing material on both sides of its cell to prevent high-pressure hydrogen from leaking out, and this sealing material is assembled with the cell of the electrochemical hydrogen pump 100 into a one-piece unit beforehand. Outside this cell are the aforementioned separators to mechanically fasten it and electrically couple adjacent cells in series.

In a typical multilayer structure, cells and separators are stacked alternately to about 10 to 200 cells, the resulting layered workpiece (stack) is sandwiched between end plates with a collector and an insulator therebeneath, and the two end plates are fastened with fastening rods. Supplying an appropriate amount of hydrogen-containing gas to the separators' respective gas flow channels in this case requires dividing an appropriate section of piping into groove-like branch passages for each separator and making their downstream end joined to one end of the separator's gas flow channel. Discharging an appropriate amount of hydrogen-containing gas from the separators' respective gas flow channels, on the other hand, requires dividing an appropriate section of into create groove-like branch passages for each separator and making their upstream end joined to the other end of the separator's gas flow channel. Discharging high-pressure cathode gas from the separators' respective cathodes, furthermore, requires dividing an appropriate section of piping into groove-like branch passages for each separator and making their upstream end joined to the separator's cathode.

Such an arrangement of piping is referred to as a manifold. A manifold is formed by, for example, a series of through holes created through an appropriate point of each structural element of the stack.

The hydrogen system 200, furthermore, may have components such as a temperature sensor that detects the temperature of the cell, a temperature regulator that regulates the temperature of the cell, a dew point regulator that regulates the dew point of the hydrogen-containing gas supplied to the anode AN.

It should be noted that these elements and equipment, not illustrated, are by way of example and are not intended to be restrictive.

### [Operation]

The following describes an example of hydrogen compression by the hydrogen system 200 with reference to the drawing. The following operation may be conducted by, for example, a processor of the controller 50 reading a control program stored in a data storage in the controller 50. The involvement of the controller 50 in the following operation, however, is not necessarily essential. A human operator may carry out part of the operation. In the following example, a case in which the controller 50 controls the operation is described.

First, a low-pressure and high-humidity hydrogen-containing gas is supplied to the anode AN of the electrochemical hydrogen pump 100, and a voltage from a voltage applicator, not illustrated, is fed to the electrochemical hydrogen pump 100. As a result, at the anode catalyst layer of the anode AN, hydrogen molecules dissociate into protons and electrons (formula (1)). The protons move to the cathode catalyst layer by traveling inside the electrolyte membrane 10. The electrons move to the cathode catalyst layer through the voltage applicator.

At the cathode catalyst layer, hydrogen molecules are regenerated (formula (2)). It is known that when they move inside the electrolyte membrane 10, the protons bring a predetermined amount of water, named electroosmotic water, with themselves from the anode AN to the cathode CA.

If, for example, compressed hydrogen of high pressure produced at the cathode CA of the electrochemical hydrogen pump 100 is supplied to a hydrogen tank, not illustrated, through a cathode gas outlet line, not illustrated, the hydrogen (H₂) produced at the cathode CA can be compressed by increasing the pressure drop in the cathode gas outlet line using, for example, a back pressure valve or a regulator valve (not illustrated) on the cathode gas outlet line. Increasing the pressure drop in the cathode gas outlet line in this context corresponds to reducing the opening of the back pressure or regulator valves on the cathode gas outlet line.

Anode: Hz (low pressure) → 2H⁺ + 2e⁻ ... (1)

Cathode: 2H⁺ + 2e⁻ → Hz (high pressure) ... (2)

Through such a process of applying a voltage across an anode AN and a cathode CA with an interposed electrolyte membrane 10 therebetween in the hydrogen system 200, the operation takes place in which compressed hydrogen is produced by transporting, to the cathode CA, hydrogen in a hydrogen-containing gas supplied to the anode AN. The cathode gas produced at the cathode CA, containing compressed hydrogen, is, for example, processed to remove water, impurities, etc., present therein and then stored in the hydrogen tank temporarily.

Then the hydrogen system 200 stops operating. Specifically, the system stops the cathode gas supply from the cathode CA of the electrochemical hydrogen pump 100 to the hydrogen tank, for example by shutting the back pressure or regulator valve on the cathode gas outlet line.

If the electrochemical hydrogen pump 100 is, for example, a compressor for fuel-cell forklifts, there is usually a high-pressure, approximately 40 MPa, cathode gas on its cathode CA side. On the anode AN side is a low-pressure, approximately 0.1 MPa, and high-humidity (e.g., a steam content of the gas of approximately 12% at the saturation water vapor pressure at approximately 50°C and a relative humidity of 100%) hydrogen-containing gas. With such being the situation, the hydrogen system 200 according to this embodiment operates to make the pressure at the anode AN higher than the pressure at the cathode CA while being off.

Incidentally, the cathode gas stored in the hydrogen tank may be supplied when needed, for example to fuel cells.

In this way, the hydrogen system 200 according to this embodiment and the method according to this embodiment for operating a hydrogen system 200 can provide a smaller loss of efficiency in hydrogen compression at a restart than known ones.

Specifically, the hydrogen system 200 according to this embodiment and the method according to this embodiment for operating a hydrogen system 200 are configured such that during a stop and with the hydrogen-containing gas prevented from flowing out of the anode AN, the pressure regulator 20 is controlled to make the pressure at the anode AN higher than the pressure at the cathode CA. This helps reduce the back diffusion of water from the cathode CA to the anode AN while the hydrogen system 200 is off. If condensate forms at the anode AN, furthermore, the differential pressure between the anode AN and the cathode CA helps diffuse the condensate from the anode AN to the cathode CA. At a lower risk of flooding at the anode AN, the hydrogen system 200 according to this embodiment provides a reduced loss of efficiency in hydrogen compression at a restart.

In addition, the user may perform a gas purge operation at the anode AN during a stop to prevent flooding at the anode AN as in PTL 1, or if flooding has already occurred at the anode AN during a stop, the user may conduct a gas purge operation to resolve it when restarting the hydrogen system 200. As stated, the hydrogen system 200 according to this embodiment can diffuse water in the anode to the cathode CA and mitigate the back diffusion of water from the cathode CA to the anode AN by making the pressure at the anode AN higher than the pressure at the cathode CA. The hydrogen system 200 according to this embodiment, therefore, can operate without such gas purge operations during a stop or at a restart. Even if any such gas purge operation is carried out, furthermore, the hydrogen system 200 according to this embodiment requires a shorter duration of the gas purge operation.

If the pressure at the cathode CA were higher than the pressure at the anode AN while the hydrogen system 200 is off, there could occur a dry-to-wet shift and vice versa on the cathode CA side of the electrolyte membrane 10 because of the back diffusion of water from the cathode CA to the anode AN. This could cause repeated swelling and shrinking of this portion of the electrolyte membrane 10, affecting the durability of the electrolyte membrane 10. The hydrogen system 200 according to this embodiment, however, can mitigate this inconvenience by making the pressure at the anode AN higher than the pressure at the cathode CA while being off.

### (Example 1)

The hydrogen system 200 according to this example and the method according to this example for operating a hydrogen system 200 are the same as the hydrogen system 200 according to Embodiment 1 except for the control sequence of the controller 50 described below.

While the hydrogen system 200 is off, the controller 50 makes the pressure at the anode AN higher than the pressure at the cathode CA by controlling the pressure regulator 20 to increase the pressure at the anode AN.

The advantages of the hydrogen system 200 according to this example and the method according to this example for operating a hydrogen system 200 are not described; they are the same as the advantages of the hydrogen system 200 according to Embodiment 1 and the method according to Embodiment 1 for operating a hydrogen system 200.

Except for the described features, the hydrogen system 200 according to this example and the method according to this example for operating a hydrogen system 200 may be the same as in Embodiment 1.

### (Example 2)

The hydrogen system 200 according to this example is the same as the hydrogen system 200 according to Embodiment 1 except for the control sequence of the controller 50 described below.

When the differential pressure between the anode AN and the cathode CA decreases after the controller 50 controls the pressure regulator 20 to increase the pressure at the anode AN while the hydrogen system 200 is off, the controller 50 controls the pressure regulator 20 to increase the pressure at the anode AN.

By virtue of these, the hydrogen system 200 according to this example can maintain an appropriate differential pressure between the anode AN and the cathode CA because, even if the differential pressure decreases after the pressure at the anode AN is increased, it is capable of further increasing the pressure at the anode AN.

For example, when the temperature of the electrochemical hydrogen pump 100 goes down over time after the pressure at the anode AN is increased, steam in the hydrogen-containing gas present at the anode AN can condense. The resulting drop in the pressure at the anode AN, associated with a reduced number of moles of gas molecules of the hydrogen-containing gas present there, will lower the differential pressure between the anode AN and the cathode CA, potentially weakening its effects, the diffusion of water from the anode AN to the cathode CA and the reduction of the back diffusion of water from the cathode CA to the anode AN. The hydrogen system 200 according to this example, configured as described above, offers a reduced risk that these effects will be weakened.

Except for the described features, the hydrogen system 200 according to this example may be the same as in Embodiment 1 or Example 1 of Embodiment 1.

### (Example 3)

Fig. 2 is a diagram illustrating an example of a hydrogen system according to Example 3 of Embodiment 1.

In the example illustrated in Fig. 2, the hydrogen system 200 according to this embodiment includes an electrochemical hydrogen pump 100, a pressure regulator 20, an anode supply line 21, an anode inlet valve 27, and a controller 50. The electrochemical hydrogen pump 100 is the same as in Embodiment 1.

The anode supply line 21 is a flow channel through which gas to be supplied to the anode AN of the electrochemical hydrogen pump 100 flows.

The pressure regulator 20 is a device including a gas supply unit 20A. The gas supply unit 20A, furthermore, is on the anode supply line 21. The gas supply unit 20A is a device that supplies gas to the anode AN. The gas supply unit 20A can be of any type as long as it can supply gas to the anode AN. Examples of gas supply units 20A include a pump, an on-off valve, and a pressure-reducing valve. If the gas supply unit 20A is an on-off or pressure-reducing valve, the anode supply line 21 is coupled to a gas source having a predetermined supply pressure. An example of a gas source having a predetermined supply pressure is a gas cylinder. The gas supply unit 20A, furthermore, may supply the anode AN with the aforementioned hydrogen-containing gas or with a gas different from the hydrogen-containing gas. The details of the latter will be described in Embodiment 6.

The anode inlet valve 27 is a valve installed on the anode supply line 21 upstream of the pressure regulator 20. The anode inlet valve 27 can be of any type as long as such an anode supply line 21 can be cut off therewith. Examples of valves that can be used as the anode inlet valve 27 include, but are not limited to, a driven valve, for example driven by nitrogen gas or air, and an electromagnetic valve.

In this example, the pressure at the anode AN is increased by the controller 50 controlling the gas supply unit 20A to supply gas to the inlet of the anode AN with the outlet of the anode AN sealed. After the pressure at the anode AN is increased, the anode inlet valve 27 on the anode supply line 21 is shut.

It should be noted that in this example, the state of "the hydrogen-containing gas prevented from being flowing out of the anode AN" is achieved by making "the outlet of the anode AN sealed" when gas is supplied to the inlet of the anode AN. The state of "the outlet of the anode AN sealed" is reached when, for example, an anode discharge line, which leads to the outlet of the anode AN, is cut off while gas is being supplied to the inlet of the anode AN. Such a cutoff of an anode discharge line may take place at an anode outlet valve installed on the anode discharge line. A specific example of an anode discharge line and an anode outlet valve will be described in Embodiment 3.

By virtue of these, the hydrogen system 200 according to this example and the method according to this example for operating a hydrogen system 200 can increase, or allow the system to increase, the pressure at the anode AN properly by using supply pressure of gas supplied to the anode AN with the outlet of the anode AN sealed.

Except for the described features, the hydrogen system 200 according to this example may be the same as the hydrogen system 200 according to any of Embodiment 1 or Example 1 or 2 of Embodiment 1.

### (Embodiment 2)

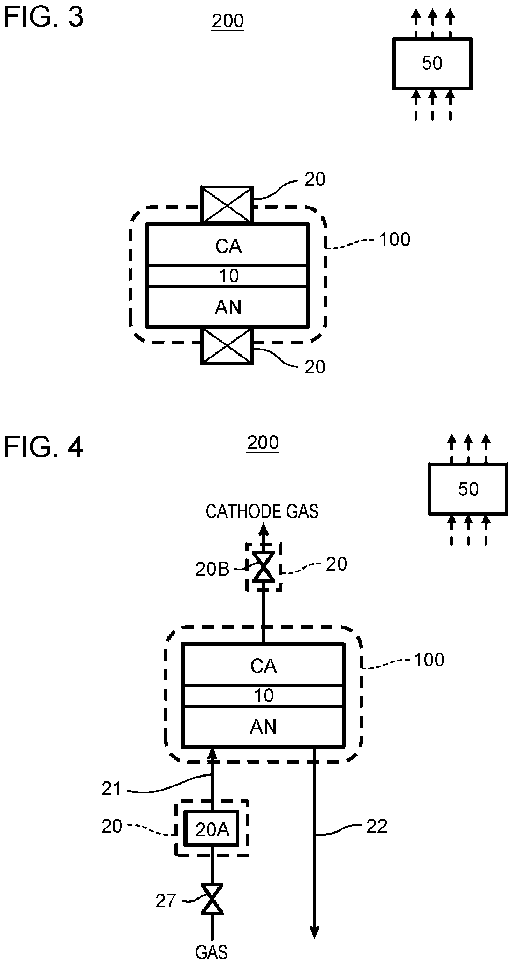

Fig. 3 is a diagram illustrating an example of a hydrogen system according to Embodiment 2.

In the example illustrated in Fig. 3, the hydrogen system 200 according to this embodiment includes an electrochemical hydrogen pump 100, a pressure regulator 20, and a controller 50. The electrochemical hydrogen pump 100 is the same as in Embodiment 1.

The pressure regulator 20 is a device that regulates the pressure at the anode AN and that at the cathode CA. The pressure regulator 20 can be of any type as long as it can regulate the pressure at the anode AN and that at the cathode CA. A specific example of such a pressure regulator 20 will be described in Example 3 of this embodiment.

In this embodiment, the controller 50 controls, while the hydrogen system 200 is off, the pressure regulator 20 to increase the pressure at the anode AN and reduce the pressure at the cathode CA at the same time, thereby making the pressure at the anode AN higher than the pressure at the cathode CA.

By virtue of these, the hydrogen system 200 according to this embodiment and the method according to this embodiment for operating a hydrogen system 200 can maintain, or allow the system to maintain, the differential pressure between the anode AN and the cathode CA easily, compared with when the pressure at the anode AN is made higher than the pressure at the cathode CA only by reducing the pressure at the cathode CA or when the pressure at the anode AN is made higher than the pressure at the cathode CA only by increasing the pressure at the anode AN. As a result, the hydrogen system 200 according to this embodiment achieves an even smaller loss of efficiency in hydrogen compression at a restart.

The operation of increasing the pressure at the anode AN and the operation of reducing the pressure at the cathode CA can take place in any order. As in Example 3 of this embodiment, the operation of reducing the pressure at the cathode CA may be followed by the operation of increasing the pressure at the anode AN, or as in a variation of this embodiment, these operations may be performed in the reverse order. These operations may even be run to overlap in terms of timing.

Except for the described features, the hydrogen system 200 according to this embodiment and the method according to this embodiment for operating a hydrogen system 200 may be the same as in any of Embodiment 1 or Examples 1 to 3 of Embodiment 1.

### (Example 1)

The hydrogen system 200 according to this example is the same as the hydrogen system 200 according to Embodiment 2 except for the control sequence of the controller 50 described below.

When the differential pressure between the anode AN and the cathode CA decreases after the controller 50 controls the pressure regulator 20 to increase the pressure at the anode AN and reduce the pressure at the cathode CA at the same time, the controller 50 controls the pressure regulator 20 to increase the pressure at the anode AN.

By virtue of these, the hydrogen system 200 according to this example can maintain an appropriate differential pressure between the anode AN and the cathode CA because, even if the differential pressure decreases after the pressure at the anode AN is increased and the pressure at the cathode CA is reduced, it is capable of further increasing the pressure at the anode AN.

Except for the described features, the hydrogen system 200 according to this example may be the same as in any of Embodiment 1, Examples 1 to 3 of Embodiment 1, or Embodiment 2.

### (Example 2)

The hydrogen system 200 according to this example is the same as the hydrogen system 200 according to Embodiment 2 except for the control sequence of the controller 50 described below.

When the differential pressure between the anode AN and the cathode CA decreases after the controller 50 controls the pressure regulator 20 to increase the pressure at the anode AN and reduce the pressure at the cathode CA at the same time, the controller 50 controls the pressure regulator 20 to reduce the pressure at the cathode CA.

By virtue of these, the hydrogen system 200 according to this example can maintain an appropriate differential pressure between the anode AN and the cathode CA because, even if the differential pressure decreases after the pressure at the anode AN is increased and the pressure at the cathode CA is reduced, it is capable of further reducing the pressure at the cathode CA.

Except for the described features, the hydrogen system 200 according to this example may be the same as in any of Embodiment 1, Examples 1 to 3 of Embodiment 1, Embodiment 2, or Example 1 of Embodiment 2.

### (Example 3)

Fig. 4 is a diagram illustrating an example of a hydrogen system according to Example 3 of Embodiment 2.

In the example illustrated in Fig. 4, the hydrogen system 200 according to this example includes an electrochemical hydrogen pump 100, a pressure regulator 20, an anode supply line 21, an anode discharge line 22, an anode inlet valve 27, and a controller 50. The electrochemical hydrogen pump 100 is the same as in Embodiment 1. The anode supply line 21 and anode inlet valve 27 are the same as in Example 3 of Embodiment 1.

The pressure regulator 20 is a device including a gas supply unit 20A and a cathode valve 20B. The gas supply unit 20A is the same as in Example 3 of Embodiment 1.

The cathode valve 20B is a valve for discharging cathode gas containing compressed hydrogen from the cathode CA into somewhere other than the anode AN. The cathode valve 20B can be of any type as long as cathode gas can be discharged somewhere other than the anode AN through it. Examples of somewhere other than the anode AN include, but are not limited to, in the air.

Examples of cathode valves 20B include an on-off valve and a regulator valve, a valve with an adjustable opening. The regulator valve may be a pressure regulator valve or may be a flow regulator valve. Examples of valves that can be used as the cathode valve 20B include, but are not limited to, a driven valve, for example driven by nitrogen gas or air, and an electromagnetic valve. An example of a "first valve" according to the present disclosure is the cathode valve 20B.

The anode discharge line 22 is a flow channel through which gas discharged from the anode AN of the electrochemical hydrogen pump 100 flows. The cathode valve 20B is on the anode discharge line 22.

In this example, the pressure at the anode AN is increased by the controller 50 controlling the gas supply unit 20A to supply gas to the inlet of the anode AN with the outlet of the anode AN sealed, and the pressure at the cathode CA is reduced by the controller 50 opening the cathode valve 20B.

It should be noted that in this example, the state of "the hydrogen-containing gas prevented from being flowing out of the anode AN" is achieved by making "the outlet of the anode AN sealed" when gas is supplied to the inlet of the anode AN. The state of "the outlet of the anode AN sealed" is reached when, for example, the anode discharge line, which leads to the outlet of the anode AN, is cut off while gas is being supplied to the inlet of the anode AN. Such a cutoff of the anode discharge line may take place at an anode outlet valve installed on the anode discharge line. A specific example of an anode discharge line and an anode outlet valve will be described in Embodiment 3.

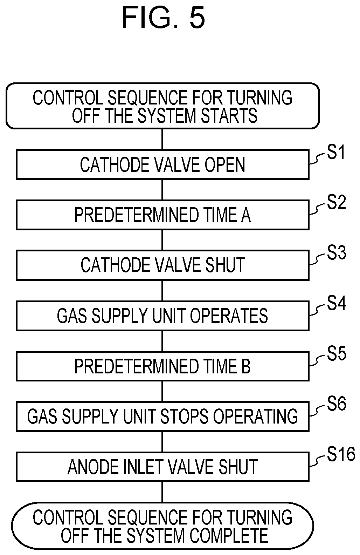

Fig. 5 is a flowchart illustrating an example of an operation of the hydrogen system according to Example 3 of Embodiment 2. The operation illustrated in Fig. 5 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

When a control sequence for turning off the hydrogen system 200 starts, the cathode gas supply from the cathode CA of the electrochemical hydrogen pump 100 to the hydrogen consumer (not illustrated) stops. At this point, the cathode valve 20B is shut, and the gas supply unit 20A is not operating. The anode inlet valve 27 may be open or may be shut, but this example describes a case in which the anode inlet valve 27 is open.

First, the cathode valve 20B is opened in step S1. Then in step S2, "predetermined time A" elapses after the opening of the cathode valve 20B, after which the cathode valve 20B is shut in step S3. "Predetermined time A" in step S2 can be, but does not need to be, any length of time between, for example, about 1 second and about 1 hour. "Predetermined time A" in step S2 can be a period of time measured with a timer of the controller 50. It should be noted that the described operation is by way of example and is not restrictive. For example, this operation may be run based on the pressure at the cathode CA rather than "predetermined time A" in step S2. The details of this operation will be described in Embodiment 4.

In steps S1 to S3, if the cathode valve 20B is an on-off valve, repeatedly opening and shutting the cathode valve 20B will taper off the pressure at the cathode CA. If the cathode valve 20B is a pressure regulator valve or flow regulator valve, regulating the pressure or flow rate based on valve opening will taper off the pressure at the cathode CA. The reason why the pressure at the cathode CA is tapered off is because releasing the pressure at the cathode CA all at once can damage those designed for high pressure of the equipment in components of the electrochemical hydrogen pump 100.

Then, in step S4, the gas supply unit 20A operates. Then in step S5, "predetermined time B" elapses after the operation of the gas supply unit 20A, after which the gas supply unit 20A stops operating in step S6, and the anode inlet valve 27 is shut in step S16. "Predetermined time B" in step S5 can be, but does not need to be, any length of time between, for example, about 10 seconds and about 300 seconds. "Predetermined time B" in step S5 can be a period of time measured with a timer of the controller 50. It should be noted that the described operation is by way of example and is not restrictive. For example, this operation may be run based on the differential pressure between the anode AN and the cathode CA rather than "predetermined time B" in step S2. The details of this operation will be described in Embodiment 4.

In such a way, a control sequence for turning off the hydrogen system 200 is completed.

By virtue of these, the hydrogen system 200 according to this example can increase the pressure at the anode AN properly by using supply pressure of gas supplied to the anode AN with the outlet of the anode AN sealed. The cathode valve 20B, furthermore, functions as a valve for releasing high-pressure cathode gas from the cathode CA to somewhere other than the anode AN. By opening the cathode valve 20B, therefore, the hydrogen system 200 according to this example can reduce the pressure at the cathode CA properly.

Except for the described features, the hydrogen system 200 according to this example may be the same as in any of Embodiment 1, Examples 1 to 3 of Embodiment 1, Embodiment 2, or Example 1 or 2 of Embodiment 2.

### (Example 4)

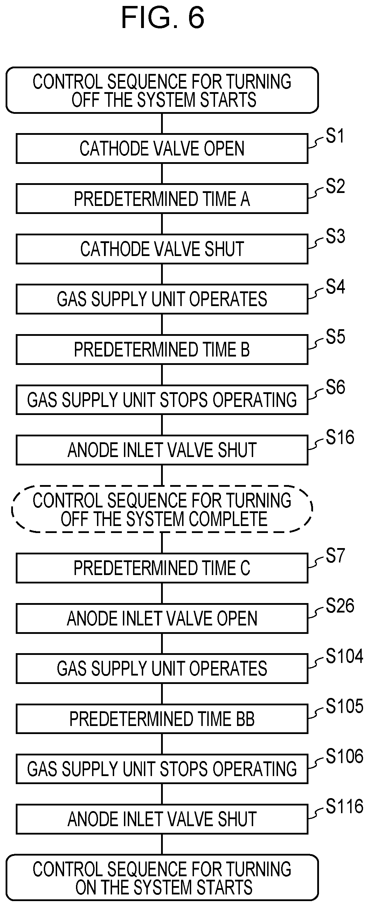

Fig. 6 is a flowchart illustrating an example of an operation of a hydrogen system according to Example 4 of Embodiment 2. The operation illustrated in Fig. 6 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S 1 to S16 in Fig. 6 is not described in detail; it is the same as in steps S1 to S16 in Fig. 5.

First, in step S7, "predetermined time C" elapses after the completion of a control sequence for turning off the hydrogen system 200, after which the anode inlet valve 27 opens in step S26, and in step S104, the gas supply unit 20A operates. Then in step S105 "predetermined time BB" elapses after the operation of the gas supply unit 20A, after which the gas supply unit 20A stops operating in step S106, and the anode inlet valve 27 is shut in step S116. "Predetermined time C" in step S7 can be, but does not need to be, about 1 hour. "Predetermined time C" in step S7 can be a period of time measured with a timer of the controller 50. "Predetermined time BB" in step S105 in Fig. 5 is the same as "predetermined time B" in step S5 in Fig. 4. Then the hydrogen system 200 may start a control sequence for starting up when appropriate.

By virtue of these, the hydrogen system 200 according to this example can maintain an appropriate differential pressure between the anode AN and the cathode CA because, even if the differential pressure decreases after the pressure at the cathode CA is reduced and the pressure at the anode AN is increased, for example because of a fall in the temperature of the electrochemical hydrogen pump 100 with the elapse of predetermined time C, it is capable of further increasing the pressure at the anode AN.

Except for the described features, the hydrogen system 200 according to this example may be the same as in any of Embodiment 1, Examples 1 to 3 of Embodiment 1, Embodiment 2, or Examples 1 to 3 of Embodiment 2.

### (Example 5)

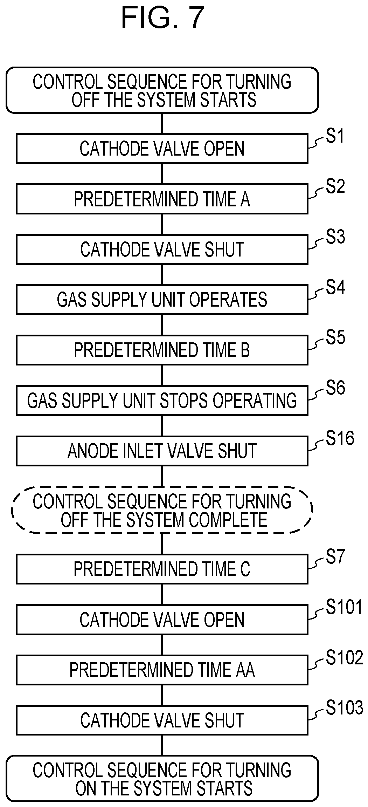

Fig. 7 is a flowchart illustrating an example of an operation of a hydrogen system according to Example 5 of Embodiment 2. The operation illustrated in Fig. 7 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S 1 to S16 in Fig. 7 is not described in detail; it is the same as in steps S1 to S16 in Fig. 5.

In step S7, "predetermined time C" elapses after the completion of a control sequence for turning off the hydrogen system 200, after which, in step S101, the cathode valve 20B is opened. Then in step S102, "predetermined time AA" elapses after the opening of the cathode valve 20B, after which the cathode valve 20B is shut in step S103. "Predetermined time C" in step S7 can be, but does not need to be, about 1 hour. "Predetermined time C" in step S7 can be a period of time measured with a timer of the controller 50. "Predetermined time AA" in step S102 in Fig. 7 can be, but does not need to be, about 60 seconds. "Predetermined time AA" in step S102 can be a period of time measured with a timer of the controller 50. Then the hydrogen system 200 may start a control sequence for starting up when appropriate.

By virtue of these, the hydrogen system 200 according to this example can maintain an appropriate differential pressure between the anode AN and the cathode CA because, even if the differential pressure decreases after the pressure at the cathode CA is reduced and the pressure at the anode AN is increased, for example because of a fall in the temperature of the electrochemical hydrogen pump 100 with the elapse of predetermined time C, it is capable of further reducing the pressure at the cathode CA.

Except for the described features, the hydrogen system 200 according to this example may be the same as in any of Embodiment 1, Examples 1 to 3 of Embodiment 1, Embodiment 2, or Examples 1 to 4 of Embodiment 2.

### (Variation)

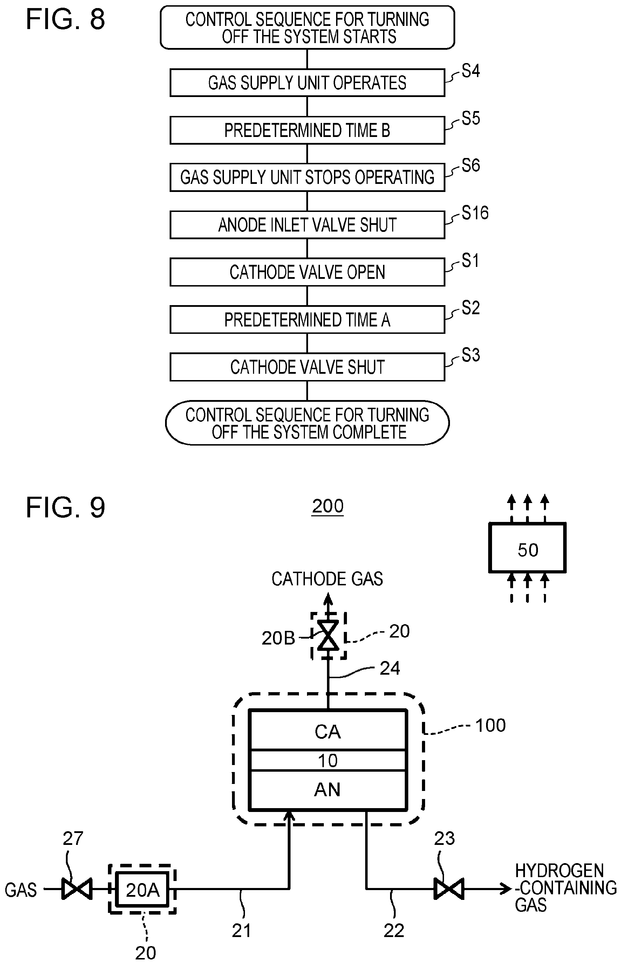

Fig. 8 is a flowchart illustrating an example of an operation of a hydrogen system according to a variation of Embodiment 2. The operation illustrated in Fig. 8 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

In Example 3 of Embodiment 2, as illustrated in Fig. 5, the operations of steps S1 to S3 precede the operations of steps S4 to S16. In this variation, as illustrated in Fig. 8, the operations of steps S4 to S16 precede the operations of steps S1 to S3.

What takes place in each of steps S4 to S16 and steps S1 to S3 in Fig. 8 and the advantages of the hydrogen system 200 according to this variation are not described; what is in each step is the same as in each of steps S4 to S16 and steps S1 to S3 in Fig. 5 except for the aforementioned order of steps, and the advantages are the same as the advantages of the hydrogen system 200 of Example 3 of Embodiment 2.

Except for the described features, the hydrogen system 200 according to this example may be the same as in any of Embodiment 1, Examples 1 to 3 of Embodiment 1, Embodiment 2, or Examples 1 to 5 of Embodiment 2.

### (Embodiment 3)

Fig. 9 is a diagram illustrating an example of a hydrogen system according to Embodiment 3.

In the example illustrated in Fig. 9, the hydrogen system 200 according to this embodiment includes an electrochemical hydrogen pump 100, a pressure regulator 20, an anode supply line 21, an anode discharge line 22, an anode outlet valve 23, a cathode discharge line 24, an anode inlet valve 27, and a controller 50. The electrochemical hydrogen pump 100 is the same as in Embodiment 1. The pressure regulator 20 and anode inlet valve 27 are the same as in Example 3 of Embodiment 2. It should be noted that the following example describes a case in which the hydrogen-containing gas is supplied to the anode AN by a gas supply unit 20A, but this is not the only possibility. That is, in this example, the anode supply line 21 is a flow channel through which the hydrogen-containing gas to be supplied to the anode AN of the electrochemical hydrogen pump 100 flows. If the electrochemical hydrogen pump 100 has the aforementioned stack, the downstream end of the anode supply line 21 may lead to, for example, a manifold for the hydrogen-containing gas to be introduced through. The upstream end of the anode supply line 21 may be coupled to, for example, a hydrogen-containing gas source (not illustrated). Examples of hydrogen-containing gas sources include a reformer, a water electrolyzer, and a hydrogen cylinder. In this example, furthermore, the anode discharge line 22 is a flow channel through which the hydrogen-containing gas discharged from the anode AN of the electrochemical hydrogen pump 100 flows. If the electrochemical hydrogen pump 100 has the aforementioned stack, the upstream end of the anode discharge line 22 may lead to, for example, a manifold for the hydrogen-containing gas to be guided out through.

The anode outlet valve 23 is a valve installed on the anode discharge line 22. The anode outlet valve 23 can be of any type as long as the anode discharge line 22 can be cut off therewith. Examples of valves that can be used as the anode outlet valve 23 include, but are not limited to, a driven valve, for example driven by nitrogen gas or air, and an electromagnetic valve. An example of a "third valve" according to the present disclosure is the anode outlet valve 23.

The cathode discharge line 24 is a flow channel through which cathode gas discharged from the cathode CA of the electrochemical hydrogen pump 100 flows. The cathode valve 20B is on the cathode discharge line 24. If the electrochemical hydrogen pump 100 includes the aforementioned stack, the upstream end of the cathode discharge line 24 may lead to, for example, a manifold for cathode gas to be guided out through.

In this embodiment, the controller 50 makes the outlet of the anode AN sealed by shutting the anode outlet valve 23.

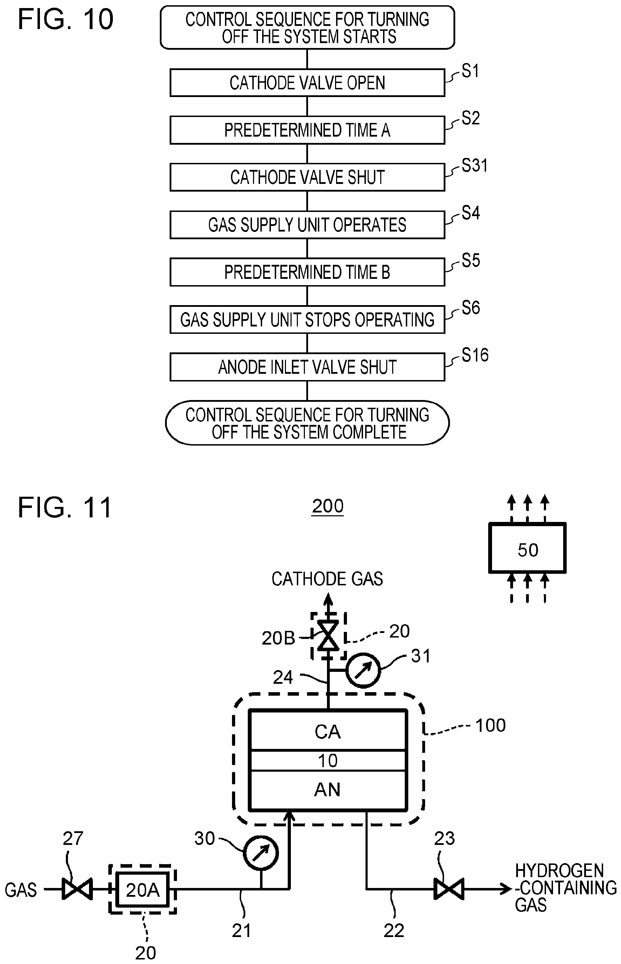

Fig. 10 is a flowchart illustrating an example of an operation of the hydrogen system according to Embodiment 3. The operation illustrated in Fig. 10 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S1, S2, and S4 to S16 in Fig. 10 is not described in detail; it is the same as in steps S1, S2, and S4 to S16 in Fig. 5. When a control sequence for turning off the hydrogen system 200 starts, the cathode valve 20B is shut, and the anode outlet valve 23 is also shut. The gas supply unit 20A is not operating. The anode inlet valve 27 may be open or may be shut, but this example describes a case in which the anode inlet valve 27 is open.

In step S2, "predetermined time A" elapses after the opening of the cathode valve 20B, after which the cathode valve 20B is shut in step S31. This makes the outlet of the anode AN sealed.

By virtue of these, the hydrogen system 200 according to this embodiment can make the outlet of the anode AN sealed simply by shutting the anode outlet valve 23 installed on the anode discharge line 22.

Except for the described features, the hydrogen system 200 according to this embodiment may be the same as in any of Embodiment 1, Examples 1 to 3 of Embodiment 1, Embodiment 2, Examples 1 to 5 of Embodiment 2, or the variation of Embodiment 2.

### (Embodiment 4)

Fig. 11 is a diagram illustrating an example of a hydrogen system according to Embodiment 4.

In the example illustrated in Fig. 11, the hydrogen system 200 according to this embodiment includes an electrochemical hydrogen pump 100, a pressure regulator 20, an anode supply line 21, an anode discharge line 22, an anode outlet valve 23, a cathode discharge line 24, an anode inlet valve 27, a first pressure gauge 30, a second pressure gauge 31, and a controller 50. The electrochemical hydrogen pump 100 is the same as in Embodiment 1. The pressure regulator 20, anode supply line 21, anode discharge line 22, anode outlet valve 23, anode inlet valve 27, and cathode discharge line 24 are the same as in Embodiment 3. It should be noted that the following example describes a case in which the hydrogen-containing gas is supplied to the anode AN by a gas supply unit 20A, but this is not the only possibility.

The first pressure gauge 30 is a sensor for measuring the pressure at the anode AN (hereinafter the anode pressure). The first pressure gauge 30 can be of any type as long as the anode pressure can be measured therewith. In the example illustrated in Fig. 11, the first pressure gauge 30 is on the anode supply line 21 downstream of the gas supply unit 20A.

The second pressure gauge 31 is a sensor for measuring the pressure at the cathode CA (hereinafter the cathode pressure). The second pressure gauge 31 can be of any type as long as the cathode pressure can be measured therewith. In the example illustrated in Fig. 11, the second pressure gauge 31 is on the cathode discharge line 24 upstream of the cathode valve 20B.

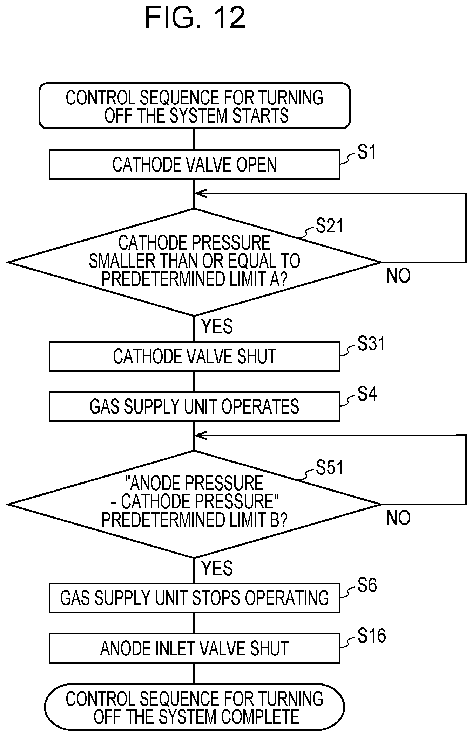

Fig. 12 is a flowchart illustrating an example of an operation of the hydrogen system according to Embodiment 4. The operation illustrated in Fig. 12 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S1, S31, S4, S6, and S16 in Fig. 12 is not described in detail; it is the same as in steps S1, S31, S4, S6, and S16 in Fig. 10. When a control sequence for turning off the hydrogen system 200 starts, the cathode valve 20B is shut, and the anode outlet valve 23 is also shut. The gas supply unit 20A is not operating. The anode inlet valve 27 may be open or may be shut, but this example describes a case in which the anode inlet valve 27 is open.

With the cathode valve 20B open since step S1, it is determined in step S21 if the cathode pressure has reached predetermined limit A or below. "Predetermined limit A" in step S21 can be, but does not need to be, any gauge pressure between, for example, about 0.01 MPa and 0.1 MPa.

If the cathode pressure exceeds predetermined limit A (if "No" in step S21), the cathode valve 20B is kept open. When the cathode pressure reaches predetermined limit A or below (if "Yes" in step S21), the operation proceeds to the next step, S31, and in step S31, the cathode valve 20B is shut.

With the gas supply unit 20A operating since step S4, it is determined in step S51 if the differential pressure between the anode and cathode pressures, "anode pressure - cathode pressure," has reached predetermined limit B. "Predetermined limit B" in step S51 can be, but does not need to be, any gauge pressure between, for example, about 0.01 MPa and 1 MPa.

If the differential pressure "anode pressure - cathode pressure" has yet to reach predetermined limit B (if "No" in step S51), the gas supply unit 20A is kept allowed to operate. If the differential pressure "anode pressure - cathode pressure" has reached predetermined limit B (if "Yes" in step S51), the operation proceeds to the next step, S6, and in step S6, the gas supply unit 20A stops operating.

By virtue of these, the hydrogen system 200 according to this embodiment can know the timing of its shutting the cathode valve 20B properly, based on the cathode pressure measured with the first pressure gauge 30. The hydrogen system 200 according to this embodiment, furthermore, can know the timing of its stopping the operation of the gas supply unit 20A properly, based on the differential pressure between the anode and cathode pressures, "anode pressure - cathode pressure," measured with the first and second pressure gauges 30 and 31.

The hydrogen system 200 according to this embodiment, moreover, makes the anode pressure less than 1 MPa as a gauge pressure, a pressure based on atmospheric pressure. This makes it easier to use a low-pressure design in making elements that adjoin the anode AN in the hydrogen-containing gas supply system and gas lines for the anode AN, helping reduce equipment cost compared with when the anode pressure is made higher than or equal to 1 MPa as a gauge pressure.

The above predetermined limits A and B, however, are by way of example and are not restrictive. That is, for the hydrogen system 200 according to this embodiment, predetermined limits A and B can be set to any values, with the proviso that the anode pressure is higher than the cathode pressure while the hydrogen system 200 is off. For example, if the electrochemical hydrogen pump 100 is a compressor for fuel-cell forklifts, there is usually a high-pressure, approximately 40 MPa, cathode gas on its cathode CA side. Predetermined limits A and B, therefore, do not need to be set to near atmospheric values lower than 1 MPa.

Except for the described features, the hydrogen system 200 according to this embodiment may be the same as in any of Embodiment 1, Examples 1 to 3 of Embodiment 1, Embodiment 2, Examples 1 to 5 of Embodiment 2, the variation of Embodiment 2, or Embodiment 3.

### (Embodiment 5)

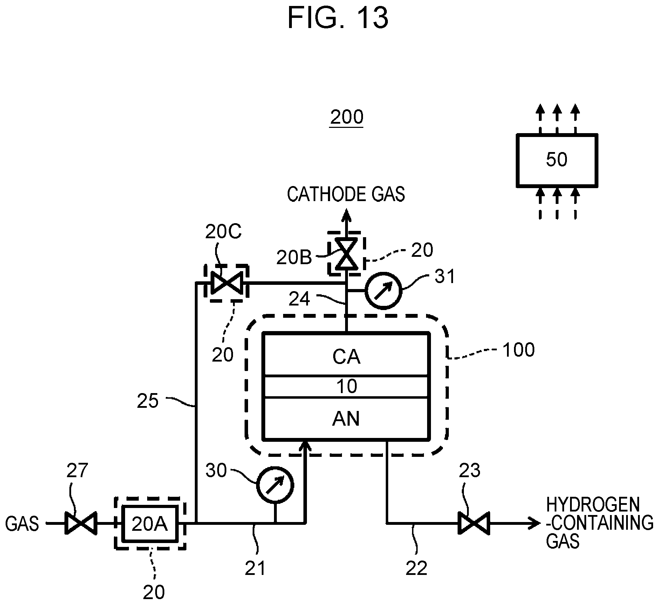

Fig. 13 is a diagram illustrating an example of a hydrogen system according to Embodiment 5.

In the example illustrated in Fig. 13, the hydrogen system 200 according to this embodiment includes an electrochemical hydrogen pump 100, a pressure regulator 20, an anode supply line 21, an anode discharge line 22, an anode outlet valve 23, an anode inlet valve 27, a cathode discharge line 24, a communication line 25, a first pressure gauge 30, a second pressure gauge 31, and a controller 50. The electrochemical hydrogen pump 100 is the same as in Embodiment 1. The anode supply line 21, anode discharge line 22, anode outlet valve 23, anode inlet valve 27, and cathode discharge line 24 are the same as in Embodiment 3. The first and second pressure gauges 30 and 31, furthermore, are the same as in Embodiment 4.

The pressure regulator 20 includes a gas supply unit 20A, a cathode valve 20B, and a communication valve 20C. The gas supply unit 20A is the same as in Example 3 of Embodiment 1. The cathode valve 20B is the same as in Example 3 of Embodiment 2. It should be noted that the following example describes a case in which the hydrogen-containing gas is supplied to the anode AN by a gas supply unit 20A, but this is not the only possibility.

The communication valve 20C is a valve for supplying cathode gas from the cathode CA to the anode AN. The communication valve 20C can be of any type as long as cathode gas can be supplied from the cathode CA to the anode AN therethrough. Examples of valves that can be used as the communication valve 20C include, but are not limited to, a driven valve, for example driven by nitrogen gas or air, and an electromagnetic valve. An example of a "second valve" according to the present disclosure is the communication valve 20C.

The communication valve 20C is on the communication line 25. If the electrochemical hydrogen pump 100 has the aforementioned stack, the upstream end of the communication line 25 may lead to, for example, a manifold for cathode gas to be guided out through. The downstream end of the communication line 25 may lead to, for example, a manifold for the hydrogen-containing gas to be introduced through. In the example illustrated in Fig. 13, the downstream end of the communication line 25 is coupled to the anode supply line 21 downstream of the gas supply unit 20A, and the upstream end of the communication line 25 is coupled to the cathode discharge line 24 upstream of the cathode valve 20B.

In this embodiment, the anode pressure is increased by the controller 50 opening the communication valve 20C to reduce the cathode pressure and then, with the outlet of the anode AN sealed, controlling the gas supply unit 20A to supply the hydrogen-containing gas to the inlet of the anode AN.

It should be noted that in this embodiment, the state of "the hydrogen-containing gas prevented from being flowing out of the anode AN" is achieved by making "the inlet and outlet of the anode AN sealed" when cathode gas is supplied from the cathode CA to the anode AN. In the example illustrated in Fig. 13, the state of "the inlet and outlet of the anode AN sealed" is reached when the anode inlet valve 27, installed on the anode supply line 21, which leads to the inlet of the anode AN, and the anode outlet valve 23, installed on the anode discharge line 22, which leads to the outlet of the anode AN, are shut when the communication valve 20C is opened.

In this embodiment, furthermore, the state of "the hydrogen-containing gas prevented from being flowing out of the anode AN" is achieved by making "the outlet of the anode AN sealed" when gas is supplied to the inlet of the anode AN. In the example illustrated in Fig. 13, the state of "the outlet of the anode AN sealed" is reached when the anode outlet valve 23, installed on the anode discharge line 22, which leads to the outlet of the anode AN, is shut when the gas supply unit 20A is controlled to supply gas to the inlet of the anode AN.

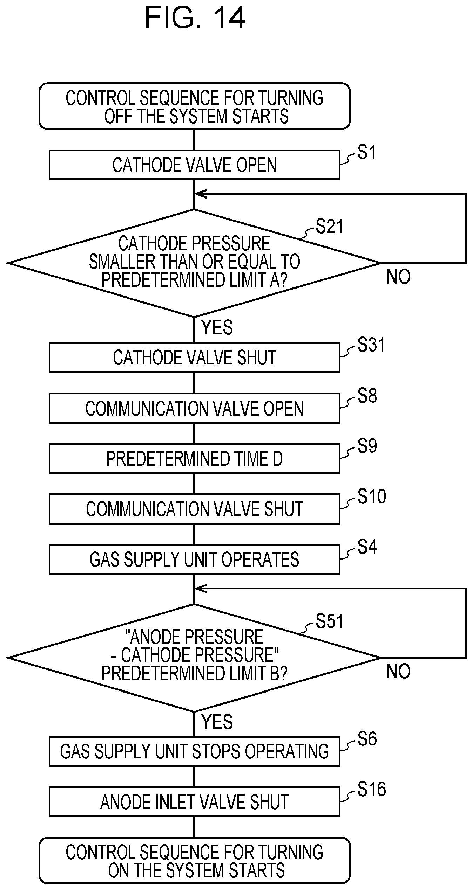

Fig. 14 is a flowchart illustrating an example of an operation of the hydrogen system according to Embodiment 5. The operation illustrated in Fig. 14 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S1, S21, and S31 in Fig. 14 is not described in detail; it is the same as in steps S1, S21, and S31 in Fig. 12. Although not indicated so in the drawing, the operations of steps S1, S21, and S31 in Fig. 14 are preliminary operations in which the cathode valve 20B is opened and shut for a predetermined length of time before the opening of the communication valve 20C in step S8. This is because if there is high-pressure cathode gas on the cathode CA side, opening the communication valve 20C without these preliminary operations can cause high-pressure cathode gas to be supplied to a hydrogen-containing gas supply system designed for low pressure. Such preliminary operations, therefore, may be unnecessary, depending on the pressure the cathode gas present at the cathode CA has when the control sequence for turning off the hydrogen system 200 starts.

When a control sequence for turning off the hydrogen system 200 starts, the cathode gas supply from the cathode CA of the electrochemical hydrogen pump 100 to the hydrogen consumer (not illustrated) stops. At this point, the cathode valve 20B and communication valve 20C are shut, and the anode outlet valve 23 is also shut. The gas supply unit 20A is not operating. The anode inlet valve 27 may be open or may be shut, but this example describes a case in which the anode inlet valve 27 is open.

In step S31, the cathode valve 20B is shut, and the communication valve 20C is opened in step S8. The anode outlet valve 23 may be opened before step S8. Opening the communication valve 20C in step S8 with the anode outlet valve 23 open will make the gas present on the anode AN purged with cathode gas.

Then in step S9, "predetermined time D" elapses after the opening of the communication valve 20C, after which the communication valve 20C is shut in step S10. This triggers supply of high-pressure cathode gas from the cathode CA to the anode AN, thereby helping control the anode and cathode pressures to be equalized. "Predetermined time D" in step S9 can be, but does not need to be, any length of time between, for example, about 60 seconds and about 30 minutes. "Predetermined time D" in step S9 can be a period of time measured with a timer of the controller 50.

Then the operation of the gas supply unit 20A is started in step S4. At this point, although not illustrated, the anode outlet valve 23 is shut if it is open when the communication valve 20C is opened.

With the gas supply unit 20A operating since step S4, it is determined in step S51 if the differential pressure between the anode and cathode pressures, "anode pressure - cathode pressure," has reached predetermined limit B. "Predetermined limit B" in step S51 can be, but does not need to be, any gauge pressure between, for example, about 0.01 MPa and 1 MPa.

If the differential pressure "anode pressure - cathode pressure" has yet to reach predetermined limit B (if "No" in step S51), the gas supply unit 20A is kept allowed to operate. If the differential pressure "anode pressure - cathode pressure" has reached predetermined limit B (if "Yes" in step S51), the operation proceeds to the next step, S6, and in step S6, the gas supply unit 20A stops operating, and the anode inlet valve 27 is shut in step S 16.

In this way, the hydrogen system according to this embodiment can increase the anode pressure properly by using supply pressure of the hydrogen-containing gas supplied to the anode AN with the outlet of the anode AN sealed. By opening the communication valve 20C, furthermore, the hydrogen system 200 according to this embodiment can reduce the cathode pressure to make it close to the anode pressure.

The communication valve 20C functions as a valve for controlling cathode gas supply from the cathode CA to the anode AN. By supplying cathode gas from the cathode CA to the anode AN by using the communication valve 20C, therefore, the hydrogen system 200 according to this embodiment reduces the amount of the hydrogen-containing gas the gas supply unit 20A supplies to the anode AN to pressurize the cathode CA compared with when no cathode gas is supplied.

Except for the described features, the hydrogen system 200 according to this embodiment may be the same as in any of Embodiment 1, Examples 1 to 3 of Embodiment 1, Embodiment 2, Examples 1 to 5 of Embodiment 2, the variation of Embodiment 2, Embodiment 3, or Embodiment 4.

### (Variation)

The hydrogen system 200 according to this variation is the same as in Embodiment 5 except for the control sequence of the controller 50 described below.

With the outlet of the anode AN sealed, the controller 50 opens the communication valve 20C to increase the anode pressure and then opens the cathode valve 20B to reduce the cathode pressure.

It should be noted that in this variation, the state of "the hydrogen-containing gas prevented from being flowing out of the anode AN" is achieved by making "the inlet and outlet of the anode AN sealed" when cathode gas is supplied from the cathode CA to the anode AN. In the example illustrated in Fig. 13, the state of "the inlet and outlet of the anode AN sealed" is reached when the anode inlet valve 27, installed on the anode supply line 21, which leads to the inlet of the anode AN, and the anode outlet valve 23, installed on the anode discharge line 22, which leads to the outlet of the anode AN, are shut when the communication valve 20C is opened.

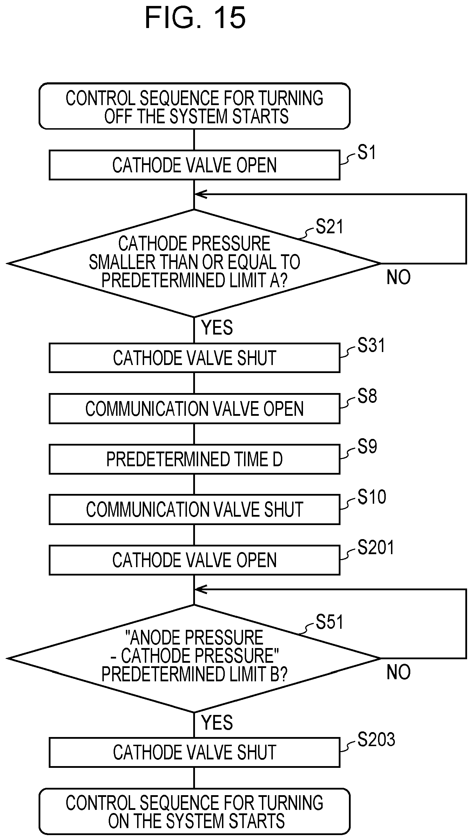

Fig. 15 is a flowchart illustrating an example of an operation of a hydrogen system according to a variation of Embodiment 5. The operation illustrated in Fig. 15 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

In Embodiment 5, as illustrated in Fig. 14, the operations of steps S4, S51, and S6 are performed after the communication valve 20C is shut in step S10. In this variation, the following operations are carried out instead of these operations.

With the cathode valve 20B open since step S201, it is determined in step S51 if the differential pressure between the anode and cathode pressures, "anode pressure - cathode pressure," has reached predetermined limit B. "Predetermined limit B" in step S51 can be, but does not need to be, any gauge pressure between, for example, about 0.01 MPa and 1 MPa.

If the differential pressure "anode pressure - cathode pressure" has yet to reach predetermined limit B (if "No" in step S51), the cathode valve 20B is kept open. If the differential pressure "anode pressure - cathode pressure" has reached predetermined limit B (if "Yes" in step S51), the operation proceeds to step S203, and the cathode valve 20B is shut in step S203.

In this way, the hydrogen system 200 according to this variation can make the pressure at the anode AN higher than the pressure at the cathode CA first by increasing the anode pressure properly, by opening the communication valve 20C and thereby using the pressure of cathode gas with the outlet of the anode AN sealed, and then by further reducing the pressure at the cathode CA by opening the cathode valve 20B.

Except for the described features, the hydrogen system 200 according to this variation may be the same as in any of Embodiment 1, Examples 1 to 3 of Embodiment 1, Embodiment 2, Examples 1 to 5 of Embodiment 2, the variation of Embodiment 2, Embodiment 3, Embodiment 4, or Embodiment 5.

### (Embodiment 6)

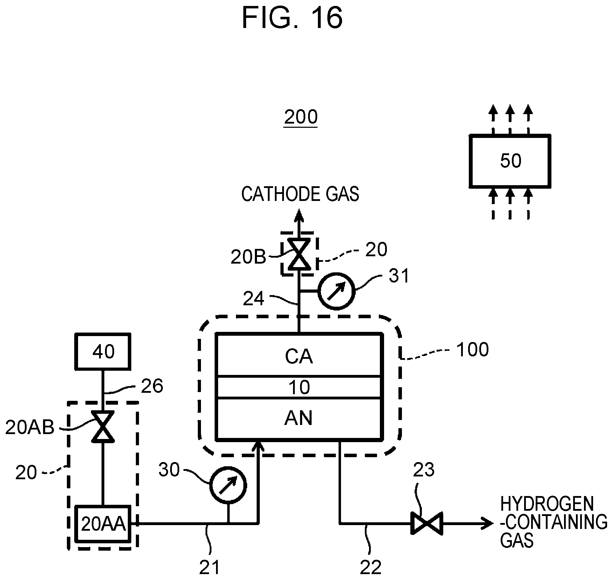

Fig. 16 is a diagram illustrating an example of a hydrogen system according to Embodiment 6.

In the example illustrated in Fig. 16, the hydrogen system 200 according to this embodiment includes an electrochemical hydrogen pump 100, an anode supply line 21, an anode discharge line 22, an anode outlet valve 23, a cathode discharge line 24, a gas seal valve 20AB, a gas supply line 26, a gas tank 40, a first pressure gauge 30, a second pressure gauge 31, and a controller 50. The electrochemical hydrogen pump 100 is the same as in Embodiment 1. The anode supply line 21, anode discharge line 22, anode outlet valve 23, and cathode discharge line 24 are the same as in Embodiment 3. The first and second pressure gauges 30 and 31 are the same as in Embodiment 4.

The pressure regulator 20 includes a gas supply unit 20AA, a gas seal valve 20AB, and a cathode valve 20B. The cathode valve 20B is the same as in Example 3 of Embodiment 2.

The gas supply unit 20AA is a device that supplies the anode AN with a gas different from the hydrogen-containing gas. The gas supply unit 20AA can be of any type as long as it can supply the anode AN with a gas different from the hydrogen-containing gas. An example of a gas supply unit 20AA is a pump. Examples of gases different from the hydrogen-containing gas include nitrogen gas, helium gas, neon gas, argon gas, krypton gas, xenon gas, air, town gas, and liquefied petroleum gas.

The gas seal valve 20AB is a valve installed on the gas supply line 26 and used to supply the aforementioned gas from the gas tank 40 to the anode AN. The gas seal valve 20AB and the gas supply line 26 can be of any type as long as the gas can be supplied from the gas tank 40 to the anode AN therethrough. In the example illustrated in Fig. 16, the upstream end of the gas supply line 26 is, but does not need to be, coupled to the gas tank 40, and the downstream end of the gas supply line 26 is, but does not need to be, coupled to the gas supply unit 20AA. For example, if the gas pressure inside the gas tank 40 is a high pressure, the downstream end of the gas supply line 26 may be coupled to the anode supply line 21 upstream of the first pressure gauge 30. Examples of valves that can be used as the gas seal valve 20AB include, but are not limited to, a driven valve, for example driven by nitrogen gas or air, and an electromagnetic valve.

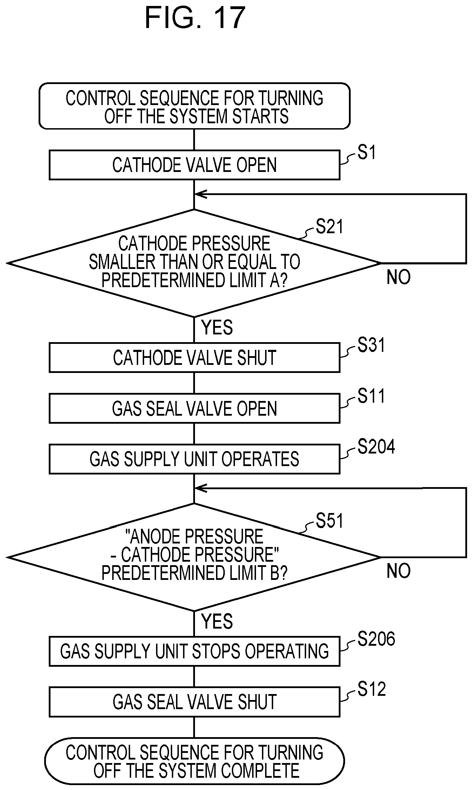

Fig. 17 is a flowchart illustrating an example of an operation of the hydrogen system according to Embodiment 6. The operation illustrated in Fig. 17 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S1, S21, and S31 in Fig. 17 is not described in detail; it is the same as in steps S1, S21, and S31 in Fig. 12. When a control sequence for turning off the hydrogen system 200 starts, the cathode valve 20B and the gas seal valve 20AB are shut, and the anode outlet valve 23 is also shut. The gas supply unit 20AA is not operating.

The cathode valve 20B is shut in step S31, and, in step S11, the gas seal valve 20AB is opened. In step S204, the gas supply unit 20AA operates. As a result, gas supply from the gas tank 40 to the anode AN starts. The operation of increasing the anode pressure by supplying the anode AN with a gas different from the hydrogen-containing gas, therefore, is performed.

With the gas supply unit 20AA operating since step S204, it is determined in step S51 if the differential pressure between the anode and cathode pressures, "anode pressure - cathode pressure," has reached predetermined limit B. "Predetermined limit B" in step S51 can be, but does not need to be, any gauge pressure between, for example, about 0.01 MPa and 1 MPa.

If the differential pressure "anode pressure - cathode pressure" has yet to reach predetermined limit B (if "No" in step S51), the gas seal valve 20AB is kept open, and the gas supply unit 20AA is kept allowed to operate. If the differential pressure "anode pressure - cathode pressure" has reached predetermined limit B (if "Yes" in step S51), the operation proceeds to the next steps, S206 and S12. In step S206, the gas supply unit 20AA stops operating, and in step S12, the gas seal valve 20AB is shut. As a result, the gas supply from the gas tank 40 to the anode AN stops.

The advantages of the hydrogen system 200 according to this embodiment and the method according to this embodiment for operating a hydrogen system 200 are not described; they can be easily understood by referring to and considering the advantages of the hydrogen systems 200 according to Embodiments 1 to 4 and the methods according to Embodiments 1 to 4 for operating a hydrogen system 200.

Except for the described features, the hydrogen system 200 according to this embodiment and the method according to this embodiment for operating a hydrogen system 200 may be the same as in any of Embodiment 1, Examples 1 to 3 of Embodiment 1, Embodiment 2, Examples 1 to 5 of Embodiment 2, the variation of Embodiment 2, Embodiment 3, Embodiment 4, Embodiment 5, or the variation of Embodiment 5.

### (Embodiment 7)

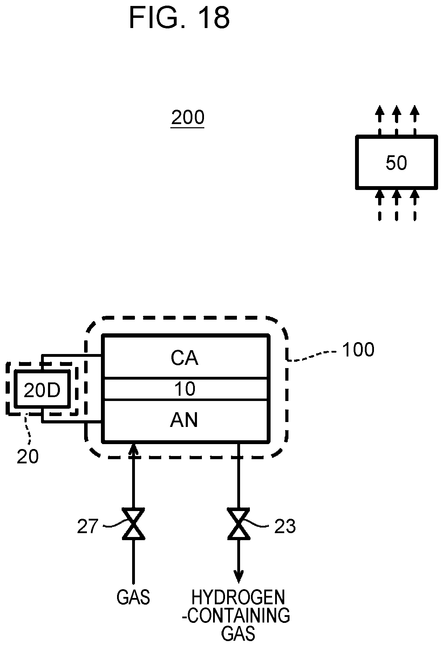

Fig. 18 is a diagram illustrating an example of a hydrogen system according to Embodiment 7.

In the example illustrated in Fig. 18, the hydrogen system 200 according to this embodiment includes an electrochemical hydrogen pump 100, a pressure regulator 20, an anode outlet valve 23, an anode inlet valve 27, and a controller 50. The electrochemical hydrogen pump 100 is the same as in Embodiment 1. The anode outlet and inlet valves 23 and 27 are the same as in Embodiment 3.

The pressure regulator 20 is a device including a voltage applicator 20D. The voltage applicator 20D is a device that applies a voltage across the anode AN and the cathode CA. The voltage applicator 20D can be of any type as long as it can apply a voltage across the anode AN and the cathode CA. By virtue of this, the system passes electricity between the anode AN and the cathode CA using the voltage applicator 20D. Examples of voltage applicators 20D include a DC-to-DC converter and an AC-to-DC converter. A DC-to-DC convertor is used if the voltage applicator 20D is coupled to a direct-current power supply, such as a solar cell, fuel cell, or battery. An AC-to-DC convertor is used if the voltage applicator 20D is coupled to an alternating-current power supply, such as mains electricity.

The voltage applicator 20D may be, for example, a multi-range power supply, with which the voltage applied across the anode AN and the cathode CA and the current that flows between the anode AN and the cathode CA are controlled so that the amount of electricity supplied to the cell of the electrochemical hydrogen pump 100 will match a particular preset value.

In this embodiment, while the hydrogen system 200 is off and with the inlet and outlet of the anode AN sealed, the controller 50 controls the voltage applicator 20D to apply a voltage across the anode AN and the cathode CA in the polarity opposite that before the hydrogen system 200 is stopped, thereby increasing the anode pressure and reducing the cathode pressure. Specifically, before the hydrogen system 200 is turned off, the high potential of the voltage applicator 20D is applied to the anode AN, and the low potential of the voltage applicator 20D is applied to the cathode CA. While the hydrogen system 200 is off, the high potential of the voltage applicator 20D is applied to the cathode CA, and the low potential of the voltage applicator 20D is applied to the anode AN.

It should be noted that in this embodiment, the state of "the hydrogen-containing gas prevented from being flowing out of the anode AN" is achieved by making "the inlet and outlet of the anode AN sealed" when the voltage opposite that before turning off the hydrogen system 200 is applied across the anode AN and the cathode CA. The state of "the inlet and outlet of the anode AN sealed" is reached when, for example, the anode inlet valve 27, installed on an anode supply line, a line leading to the inlet of the anode AN, and the anode outlet valve 23, installed on an anode discharge line, a line leading to the outlet of the anode AN, are shut.

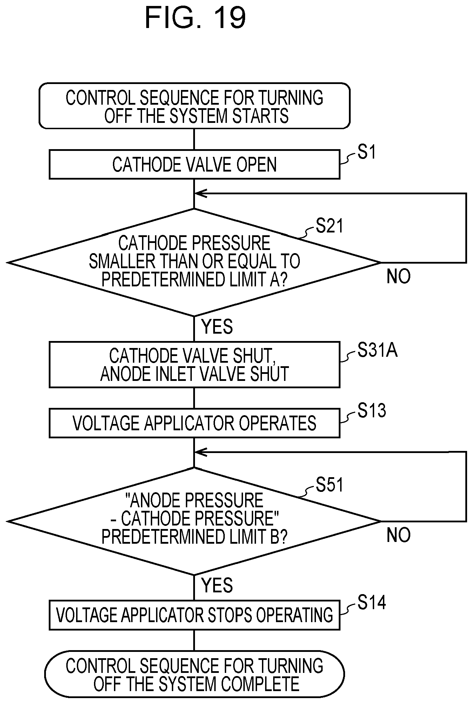

Fig. 19 is a flowchart illustrating an example of an operation of the hydrogen system according to Embodiment 7. The operation illustrated in Fig. 19 may be conducted by, for example, a processor of the controller 50 reading a control program stored in a data storage in the controller 50. The involvement of the controller 50 in this operation, however, is not necessarily essential. A human operator may carry out part of the operation. In the following example, a case in which the controller 50 controls the operation is described.

What takes place in steps S1 and S21 in Fig. 19 is not described in detail; it is the same as in steps S1 and S21 in Fig. 12. When a control sequence for turning off the hydrogen system 200 starts, the cathode valve 20B (see Fig. 4) and the anode outlet valve 23 are shut. The anode inlet valve 27 may be open or may be shut, but this example describes a case in which the anode inlet valve 27 is open. The voltage applicator 20D is not operating.

In step S31A the cathode valve 20B is shut, and the anode inlet valve 27 is also shut. In this state, in step S13, the voltage applicator 20D is operated to apply a voltage across the anode AN and the cathode CA in the polarity opposite that before the hydrogen system 200 is turned off. This makes protons move from the cathode CA to the anode AN through the electrolyte membrane 10 while the hydrogen system 200 is off.

With the voltage applicator 20D operating since step S13, it is determined in step S51 if the differential pressure between the anode and cathode pressures, "anode pressure - cathode pressure," has reached predetermined limit B. "Predetermined limit B" in step S51 can be, but does not need to be, any gauge pressure between, for example, about 0.01 MPa and 1 MPa.

If the differential pressure "anode pressure - cathode pressure" has yet to reach predetermined limit B (if "No" in step S51), the voltage applicator 20D is kept allowed to operate. If the differential pressure "anode pressure - cathode pressure" has reached predetermined limit B (if "Yes" in step S51), the operation proceeds to the next step, S14, and in step S14, the voltage applicator 20D stops operating.

By virtue of these, the hydrogen system 200 according to this embodiment applies a voltage across the anode AN and the cathode CA while being off and with the inlet and outlet of the anode AN sealed. Opposite that before the hydrogen system 200 is turned off, the applied voltage makes protons move from the cathode CA to the anode AN through the electrolyte membrane 10, thereby increasing the anode pressure and reducing the cathode pressure at the same time.

Except for the described features, the hydrogen system 200 according to this embodiment may be the same as in any of Embodiment 1, Examples 1 to 3 of Embodiment 1, Embodiment 2, Examples 1 to 5 of Embodiment 2, the variation of Embodiment 2, Embodiment 3, Embodiment 4, Embodiment 5, the variation of Embodiment 5, or Embodiment 6.

Embodiment 1, Examples 1 to 3 of Embodiment 1, Embodiment 2, Examples 1 to 5 of Embodiment 2, the variation of Embodiment 2, Embodiment 3, Embodiment 4, Embodiment 5, the variation of Embodiment 5, Embodiment 6, and Embodiment 7 may be combined unless mutually exclusive.

To those skilled in the art, many improvements to and other embodiments of the present disclosure are apparent from the foregoing description. The foregoing description should therefore be construed only as an illustration and is provided in order to teach those skilled in the art the best mode of carrying out the present disclosure. The details of the structures and/or functions set forth herein can be substantially changed without departing from the spirit of the present disclosure.

### Industrial Applicability

An aspect of the present disclosure is applicable to a hydrogen system and a method for operating a hydrogen system that can provide a smaller loss of efficiency in hydrogen compression at a restart than known ones.

### Reference Signs List

10: Electrolyte membrane
20: Pressure regulator
20A: Gas supply unit
20AA: Gas supply unit
20AB: Gas seal valve
20B: Cathode valve
20C: Communication valve
20D: Voltage applicator
21: Anode supply line
22: Anode discharge line
23: Anode outlet valve
24: Cathode discharge line
25: Communication line
26: Gas supply line
27: Anode inlet valve
30: First pressure gauge
31: Second pressure gauge
40: Gas tank
50: Controller
100: Electrochemical hydrogen pump
200: Hydrogen system
AN: Anode
CA: Cathode

## Claims

1. A hydrogen system comprising:
a compressor that causes, by applying a voltage across an anode and a cathode with an interposed electrolyte membrane therebetween, hydrogen in a hydrogen-containing gas supplied to the anode to move to the cathode and produces compressed hydrogen;
a pressure regulator that regulates pressure at least at the anode; and
a controller that controls the pressure regulator to make the pressure at the anode higher than pressure at the cathode with the hydrogen-containing gas prevented from flowing out of the anode in a stop.

2. The hydrogen system according to claim 1, wherein the controller controls the pressure regulator to increase the pressure at the anode to make the pressure at the anode higher than the pressure at the cathode.

3. The hydrogen system according to claim 2, wherein when a differential pressure between the anode and the cathode decreases after the controller controls the pressure regulator to increase the pressure at the anode, the controller controls the pressure regulator to increase the pressure at the anode.

4. The hydrogen system according to any one of claims 1 to 3, wherein:
the pressure regulator includes a gas supply unit that supplies gas to the anode; and
with an outlet of the anode sealed, the controller controls the gas supply unit to supply gas to the anode to increase the pressure at the anode.

5. The hydrogen system according to claim 1, wherein the pressure regulator regulates pressure at the anode and at the cathode, and the controller controls the pressure regulator to increase the pressure at the anode and reduce the pressure at the cathode, thereby making the pressure at the anode higher than the pressure at the cathode.

6. The hydrogen system according to claim 5, wherein when a differential pressure between the anode and the cathode decreases after the controller controls the pressure regulator to increase the pressure at the anode and reduce the pressure at the cathode, the controller controls the pressure regulator to increase the pressure at the anode.

7. The hydrogen system according to claim 5, wherein when a differential pressure between the anode and the cathode decreases after the controller controls the pressure regulator to increase the pressure at the anode and reduce the pressure at the cathode, the controller controls the pressure regulator to reduce the pressure at the cathode.

8. The hydrogen system according to any one of claims 5 to 7, wherein:
the pressure regulator includes a gas supply unit that supplies gas to the anode and a first valve for discharging cathode gas containing compressed hydrogen from the cathode into somewhere other than the anode; and
with an outlet of the anode sealed, the controller controls the gas supply unit to supply gas to the anode to increase the pressure at the anode and opens the first valve to reduce the pressure at the cathode.

9. The hydrogen system according to claim 5 or 6, wherein:
the pressure regulator includes a gas supply unit that supplies gas to the anode and a second valve for supplying cathode gas containing compressed hydrogen from the cathode to the anode; and
the controller opens the second valve to reduce the pressure at the cathode and then, with an outlet of the anode sealed, controls the gas supply unit to supply gas to the anode to increase the pressure at the anode.

10. The hydrogen system according to claim 5 or 7, wherein:
the pressure regulator includes a second valve for supplying cathode gas containing compressed hydrogen from the cathode to the anode and a first valve for discharging the cathode gas into somewhere other than the anode; and
with an outlet of the anode sealed, the controller opens the second valve to increase the pressure at the anode and then opens the first valve to reduce the pressure at the cathode.

11. The hydrogen system according to any one of claims 4 and 8 to 10, further comprising a discharge line through which the hydrogen-containing gas discharged from the anode flows and a third valve on the discharge line, wherein:
the controller shuts the third valve to make the outlet of the anode sealed.

12. The hydrogen system according to any one of claims 1 to 3 and 5 to 7, wherein the controller controls the pressure regulator to make the pressure at the anode less than 1 MPa.

13. The hydrogen system according to any one of claims 4 and 8 to 10, wherein the gas supply unit supplies a gas different from the hydrogen-containing gas.

14. The hydrogen system according to any one of claims 5 to 7, wherein the pressure regulator includes a voltage applicator that applies a voltage across the anode and the cathode, and with an inlet and an outlet of the anode sealed, the controller controls the voltage applicator to apply a voltage across the anode and the cathode in a polarity opposite a polarity before the stop, thereby increasing the pressure at the anode and reducing the pressure at the cathode.

15. A method for operating a hydrogen system, the method comprising:
a step of causing, by applying a voltage across an anode and a cathode with an interposed electrolyte membrane therebetween, hydrogen in a hydrogen-containing gas supplied to the anode to move to the cathode and producing compressed hydrogen; and a step of making pressure at the anode higher than pressure at the cathode with the hydrogen-containing gas prevented from flowing out of the anode in a stop.

16. The method according to claim 15 for operating a hydrogen system, wherein the pressure at the anode is made higher than the pressure at the cathode by increasing the pressure at the anode.

17. The method according to claim 15 for operating a hydrogen system, wherein the pressure at the anode is made higher than the pressure at the cathode by increasing the pressure at the anode and reducing the pressure at the cathode.

18. The method according to claim 16 or 17 for operating a hydrogen system, wherein the pressure at the anode is increased by supplying gas to the anode.

19. The method according to claim 17 for operating a hydrogen system, wherein the pressure at the cathode is reduced by discharging cathode gas containing the compressed hydrogen from the cathode.

20. The method according to claim 18 for operating a hydrogen system, wherein the pressure at the anode is increased by supplying a gas different from the hydrogen-containing gas to the anode.
